(19) Europäisches Patentamt

European Patent Office

Office européen des brevets

(11) **EP 0 801 299 B1**

(12) **EUROPEAN PATENT SPECIFICATION**

(45) Date of publication and mention
of the grant of the patent:
**17.03.2004 Bulletin 2004/12**

(51) Int Cl.⁷: **G01N 21/35**

(21) Application number: **96430003.2**

(22) Date of filing: **09.04.1996**

(54) **Process control**

Prozess-Steuerung

Commande de processus

(84) Designated Contracting States:
**AT BE DE ES FR GB GR IT NL PT SE**

(43) Date of publication of application:
**15.10.1997 Bulletin 1997/42**

(73) Proprietor: **Eutech Engineering Solutions Limited
Northwich, Cheshire CW8 4FN (GB)**

(72) Inventors:
• **Lambert, Didier
13920 Saint-Mitre Les Remparts (FR)**
• **Llinas, Jean Richard
13008 Marseille (FR)**
• **Descales, Bernard
13004 Marseille (FR)**
• **Martens, André
13220 Chateauneuf les Martigues (FR)**

• **Osta, Sébastien
13800 Istres (FR)**
• **Sanchez, Michel
13117 Lavéra (FR)**
• **Bages, Sylvie
13117 Lavéra (FR)**

(74) Representative: **McNeight, David Leslie et al
Lloyd Wise, McNeight & Lawrence
Highbank house
Exchange Street
Stockport Cheshire SK3 0ET (GB)**

(56) References cited:
| | |
|---|---|
| **EP-A- 0 345 182** | **EP-A- 0 437 829** |
| **EP-A- 0 607 048** | **EP-A- 0 625 702** |
| **EP-A- 0 631 810** | **US-A- 4 882 755** |
| **US-A- 5 023 804** | **US-A- 5 153 140** |
| **US-A- 5 361 912** | |

**Description**

This invention relates to a method of controlling by near infra red (NIR) spectroscopy a process which may be a physical or chemical process or separation, in particular involving hydrocarbons, especially in hydrocarbon refineries or for lubricant uses, or chemical processes including polymerisation.

NIR spectroscopy has many advantages over other methods of analysis e.g. in refineries and can cover a large number of repetitive applications accurately, quickly and on line. The NIR region between 800 and 2500nm contains the totality of molecular information in the form of combinations and overtones from polyatomic vibrations, but Mathematical techniques are needed to exploit this information and to calculate the desired parameters. EP-A-285251, 304232, 305090, EP-A-0 345 182 and US-A-5 046 846 describe the use of NIR for determining octane number of a product, or determining yields and/or properties of a product of a chemical process in a refinery or separation process from analysis on the feeds to that process, and yields and/or properties of a product of a blending operation again from analysis on the feed thereto.

At present, numerical methods described for modelling physicochemical properties based on NIR spectra are all of a correlative nature and involve relations of a regressional character between the property(ies) studied. Among these multivariable analyses are multilinear regression (MLR), Principle Component Regression (PLR), Canonic regression, and regression by Partial Least Squares (PLS). In all cases there is sought between the property and the NIR spectrum a relation which may be linear but is usually quadratic or of higher algebraic form involving regression coefficients applied to each absorption. The establishment of any regression requires a progressive calibration, as the approach is empirical and not supported by a theory.

These techniques have disadvantages, the chief of which is the need for establishing a strong correlation between the spectrum and the property, and their difficulty in dealing with positive or negative synergy between components contributing to that property. For example for determining chemical composition e.g. LINA (linear, isoparaffin, Naphthenic, Aromatics) in a hydrocarbon feed to a catalyst reformer, a PLS technique based on the NIR spectra has been described for use. The model works well on the calibration set but the response of the models when pure hydrocarbons are added e.g. cyclohexane is not satisfactory, as the model predicts changes in isoparaffins and naphthenes the reverse of that found experimentally Furthermore there are other practical difficulties, mainly in the need to identify samples of families having the same kind of relation between the spectra and the properties to be modelled. Thus the model may be limited especially with a non linear relation between spectrum and property. Especially when at the edges of the available data the accuracy of the model diminishes. The stability of the model is also a problem, as is the need when adding new standards to do laborious revisions to give the new model, especially when adjusting to a new feedstock for a process; thus testing 6 properties on 4 products leaving a distillation unit requires 24 models, each of which has to be changed for each change of the feed not included in the calibration.

We have discovered a new approach avoiding the above problems with correlations, and regression calculations, and being capable of being expanded automatically with use of a new product of different quality.

The present invention provides a method of controlling a process for which a material X is a feed or a product, in order to keep substantially constant the value $V_c$ of a property P of said product or the product of said process from said feed or yield of said process, which method comprises measuring the absorption $D_ix$ of said material at more than one wavelength in the region 600-2600nm, comparing signals (i) indicative of said absorptions or mathematical functions thereof with signals (ii) indicative of absorptions $D_im$ at the same wavelengths or mathematical functions thereof for at least 2 standards S for which the said property or yield has known value V, and at least one of said standards $S_{mc}$ having said value $V_c$ for said property or yield and controlling said process to ensure that said standard(s) $S_{mc}$ is/ are the standard or standards having the smaller or smallest average values of the absolute values of the difference at each wavelength i between the signal for the material and the signal for the standard $S_m$.

The above method can be performed without regression or correlation techniques, e.g. between the absorption at any wavelength of the material and the property/yield. This method can also be performed without determining said property or yield of said process before controlling the process.

Thus for the performance of the method of the invention, a bank can be prepared in which the NIR spectra are recorded at many wavelengths for a large number of standard materials, together with their properties (or those of products obtained by processes therefrom) determined by alternative techniques e.g. gas chromatography for chemical compositions and yields determined by known methods or viscosities by known mechanical methods. The standards are chosen to cover the area in which the method is to be used, so for octane number determination, a range of gasolines can be chosen of widely varying octane numbers, with e.g. different contents of lead, or other additives such as alkyl ethers and aromatics. For the determination of properties of polyethylenes a range of polyethylenes is chosen of widely varying properties, e.g. with different contents of comonomer, or other properties such as molecular weight. For viscosity determinations for base oils, a range of base oils is chosen of widely varying viscosities. The number of wavelengths chosen may be 2-1000 e.g. 5-200 or 10-20 such as 40-80 especially for oil refining/petrochemical operations as described below, or 5-100 or 10-80 such as 25-65 especially for use with processes which are polymerisation, oligomerisation or an organic reaction in which at least one of the reactant and a product is a functionalised compound, or 10-80 such as 40-70 especially where material X is a composition comprising part of a lubricating oil fraction from a distillation of oil. The number of standards can be at least 100 or 1000, or 100,000 up to 5 million depending on property(ies) chosen.

The wavelengths chosen may be at regular intervals such as each 1-50 or 10-50 (especially for such processes like polymerisation oligomerisation and reaction as described above) or 15-35nm (or each 1-5nm or each nanometre) or may be at irregular intervals e.g. with intervals of 1-200nm e.g. 1-100 or 1-50 such as 2-50 or 4-50 or 10-60nm, which may be random or chosen because of a change in the shape of the spectral curve at that wavelength e.g. a peak, trough or shoulder or chosen by chemical or statistical criteria such as factor analysis. The wavelengths may be in the region 600-2600nm, such as 800-2600nm, in particular 1500-2600 or 2000-2550nm, especially for oil refining/ petrochemical operations as described below or 800-2600 eg 800-2000 especially 1000-1800nm or 2000-2550nm for diene containing gasolines such as ones produced by cracking e.g. steam cracking. The wavenumbers may be in the region 16,600-3840cm$^{-1}$, e.g. 12,500 to 3840cm$^{-1}$ in particular 6660-3840 or 5000-3900cm$^{-1}$, or 12500 to 3840 12500-5000 especially 10000-5500 or 5000-3900cm$^{-1}$ especially for oil refining/petrochemical operations as described below; corresponding frequencies in Hertz can be obtained by multiplying these wavenumbers by $3 \times 10^{10}$cm/sec. Wavelengths may also be in the region 600-2500nm, e.g. 900-2500nm such as 1000-2000nm, while the wavenumbers may be 16,600-4000cm$^{-1}$ such as 11000-4000 or 10000-5000cm$^{-1}$, both in particular for the polymerisation, oligomerisation or organic reactions described above and below. Wavelengths may also be in the region 600-2600nm, e.g. 1000-2500nm but preferably 1500-2600 or 2000-2550nm, while the wavenumbers may be 16,600-3840cm$^{-1}$, e.g. 10000-4000cm$^{-1}$ e.g. 6660-3840cm$^{-1}$ or 5000-3900cm$^{-1}$, especially for processes in which material X is a composition comprising part of a lubricating oil fraction from the distillation of oil.

The signals eg absorptions (or derivatives) for the unknown sample are compared with the signals eg absorptions (or derivatives) at the same wavelength of the standards, and those standards chosen having the smallest differences. In the method of this invention, the process is controlled so that at least one of standards chosen is one $S_{mc}$ having the desired value $V_c$ for the property or yield. The absorptions at more than one wavelength may be chosen, e.g. 2-1000 such as 5-100 or 10-20. Other methods of signal processing apart from derivatives such as Fourier transformation may be used in a similar way.

In the method of the invention the standards chosen are those with the smallest average values of the absolute difference at each wavelength i between the signal exemplified by absorption/optical density (or a derivative thereof) $D_{ix}$ for the unknown material and the corresponding signal eg absorption/optical density (or derivative thereof) $D_{im}$ for the standard. The averages may be in respect of the mean value of $D_{ix}-D_{im}$ (whatever its sign i.e. absolute difference), or $(D_{ix}-D_{im})^2$ and may be the simple mean value or the differences may be weighted to take account of the different sensitivity of the absorption to the property at that wavelength or the different sensitivity of the spectrometer at that wavelength. For each standard in the bank of standards for the type of material in question, the average difference is found as described and the standard or standards with the smallest average differences chosen, e.g. at least 1 but preferably at least 2 such as upto 1000 smallest such as I (or 2)-100 or 1 (or 2)-20 but is particular 1 (or 2)-10 and especially 2-6 smallest. Advantageously the average differences chosen and hence the standard (or standards) $S_m$ chosen for the property or yield wanted are such that in relation to the unknown material X and each chosen standard $S_{mc}$ the following function is met

$$\frac{i_{xm}}{\Sigma D_{ix}} < \text{experimental error}$$

wherein $i_{xm}$ is the proximity index and is defined by $i^2(xm) = \Sigma(D_{ix}-D_{im})^2$ and the experimental error is in determining said property or yield in the standard. If more than one standard $S_{mc}$ meets the proximity index function then the average of the $S_{mc}$ values usually corresponds to the desired value $V_c$, especially the arithmetic mean, but optionally with averaging. In a modification of the method of this invention the signals (ii) are indicative of absorptions $D_{im}$ at the same wavelength or a mathematical function thereof of one standard $S_{mc}$ having the known value $V_c$ of said property or yield and controlling said process to ensure that the above function is met.

In order to aid the choice of the appropriate standards, especially in relation to a large number of wavelengths for a complex unknown mixture, it is preferred to limit the choice to those defined by means of a minimal index. For the chosen standard the minimal index is at least the same as the differences between the absorptions of the unknown and the standards. Mathematically, this may be expressed as $i^2ab \leq i^2M$ where iM is the minimal index for the property, and iab is a measure of the deviation (called the proximity index) at all the chosen wavelengths between absorption of the unknown and a chosen standard b. That measure is defined by

$$i(ab)^2 = \Sigma_i \, (D_{ia} - D_{ib})^2 \tag{I}$$

where $D_{ia}$ is the optical density (or absorbence) of unknown a at wavelength i (or a derivative thereof e.g. a first, second or third derivative of that density), and $D_{ib}$ is the optical density (or absorbence) of standard b at that wavelength i (or a derivative thereof e.g. a first, second or third derivative of that density). The value of $D_1$ is the optical density or the optical density difference with respect to the baseline of the spectrum at that wavelength, or the baseline interpolated between 2 wavelengths on either side thereof. If desired signals corresponding to other mathematical functions of the absorption eg after Fourier transformation or spectral subtraction or division may be used to provide corresponding proximity and Minimal Indices.

If desired instead of the optical density $D_i$ a normalized density $W_i$ may be used where $W_i = D_i/\Sigma D_i$. This normalization avoids errors due to small electronic fluctuations in the apparatus and compensates for small differences in the optical path between the optical cells.. In this case the proximity index is defined by

$$I(ab)^2 = \Sigma_i \, (W_{ia} - W_{ib})^2 \tag{2}$$

The indices can be weighted as desired for increasing resolution. One approach is to define the indices as follows.

$$I(ab)^m = \Sigma \text{Abs value} \, (X_{ia} - X_{ib})^m / \sigma_i^n \tag{3}$$

where $X_i$ is $D_i$ or $W_i$ or a mathematical combination thereof, $\sigma_i$ is the standard deviation of X for the set of samples considered (at that wavelength) and each of m and n which are the same or different is weighting factor which is positive but can be a whole number or a fraction. Other variants can be used with other weighting factors such as those involving the spectral experimental error $e_i$, where $e_i$ is the reproducibility of the spectral measurement at wavelength i. The choice between the different options for the weighted indices may be dictated by numerical efficiency.

The reproducibility of the experimental measurements in the standards may be at least 90% or 94% or 95%. The minimal index may be obtained from a reference standard samples set according to the following procedure, hereafter called the Minimal Index Procedure. The NIR spectra for 2 standard samples A and B and their property P e.g. Octane Number, or viscosity e.g. for a polymer, or density e.g. for a lubricating oil fraction are determined. By means of equation (1), (2) or (3), the value of the proximity index $i_{ab}$ is determined via the absorptions at a series of wavelengths; this index is applicable to the difference in properties $P_a - P_b$ called $EP_{ab}$.

This process is repeated with other pairs of standards c and d, e and f etc to obtain a series of Proximity Indices $i_{cd}$ etc with corresponding property differences $EP_{cd}$ etc. For different values of a parameter L which is greater than the indices $i_{ab}$ etc, the corresponding values of $EP_{ab}$ etc are averaged to give an average $EP_{ij}$ for that value of L; the different values of $EP_{ij} + t\sigma/\sqrt{K}$ are then plotted on a graph against L $\sigma$ is the accuracy of the property determination and K is the number of pairs of samples for which $i_{ab}$ is inferior to a given L. t is the Student factor at a given level of confidence. The intercept is then measured between the curve obtained and a line usually horizontal which is the reproducibility of the property level at an appropriate confidence interval e.g. 90% or more usually 95%; the abcissa portion of the intercept gives the minimal index $i_{min}$, which is the minimum value of $i_{ab}$ for which $P_a = Pb$ within the frame of experimental error.

From this minimal index by Procedure 1, the standards can be chosen which have values of $i^2_{ab} \leq i^2_{min}$ where in this case a is the unknown and b is a standard, as in this case the difference between Property a and Property b is less than or equal to $\sigma\sqrt{2}$, where $\sigma$ is the experimental error in measuring the property. Then if the standard meeting this requirement is $S_{mc}$ with property or yield value $V_c$, the process is under control, but if a different standard is nearest to the unknown then process needs adjustment as described below.

The process may be controlled to keep substantially constant more than one Property or yield at once, e.g. at least 2, such as 1-30 e.g. 2-10 properties at once. Each property of the standards has a particular unweighted, minimal index, which may lie in the region $0\text{-}10^{-10}$ e.g. $10^{-1}$ to $10^{-9}$ or $10^{-2}$ to $10^{-8}$, in particular $10^{-7}$ (or $5\times10^{-7}$) to $5\times10^{-4}$ for Minimal Indices derived from absorbancies; corresponding Minimal Indices may be obtained for other signals/functions. If the Minimal Index chosen is the smallest for all the properties desired, then the same one may be used for all the properties and the standards chosen will be suitable for all the properties. The Minimal Index for each property may be used separately, with different numbers of standards chosen for each property (assuming different Minimal Indices). If desired the same Minimal Index may be used, which is not the smallest, resulting in some of the chosen standards (with a higher Minimal Index) giving some properties of high accuracy and some (with a lower Minimal Index) giving some properties of less high accuracy.

The value of the property or yield to be controlled may be of the sample being analyzed or a product obtained from that sample e.g. a product of blending, cracking, separating or polymerising the sample, as the property value obtained is derived from the standards, and they will have been determined as needed for the eventual use. Our EP304232 and 305090 referred to above describes such techniques when applied to use of NIR with correlation to blending, separating or cracking operation; the same principles apply in the present method.

If the density of the standards in the data bank is sufficient to have $i^2ab \leq i^2$ min as is usually the case, the above procedure is very satisfactory. But there are occasions when the bank is incomplete, because of shortage of data of properties in a particular area i.e. a low density of standards or the sensitivity of the property to changes in absorption is so small, that a very small Minimal Index is required and there may be few standards with proximity indices meeting it. It is possible simply choose a larger Minimal Index with e.g. 1-5 times such as 1.5-2 times the Minimal Index; the results may be less accurate than those from a smaller minimal index.

However, a more accurate approach with a low density of standards involves a special densification process of Procedure 2, in which random or semi random densification of the neighbourhood of the unknown is achieved by generation of synthetic standards, based on standards already in the bank. Each new synthetic standard may be obtained from combinations of standards taken at random from the bank but preferably it is obtained from the other standards by the constraint of choosing only a mixture ofN standards for which

$$(Min)C_j - u_j \leq C_{ij} \leq (Max)C_j + u_j \tag{4}$$

and

$$\Sigma C_{ij} = 1 \tag{5}$$

where

$C_{ij}$ is the fraction of component j in the sample $_i$.
Min $C_j$ is the minimum amount of $_j$ in the initial calibration mixture i.e. standards in the bank or in the samples for which the method is to be used, and
Max $C_j$ is the maximum amount of $_j$ in the initial calibration mixture i.e. standards in the bank or in the samples for which the method is to be used, and
uj is usually between 1 and 0.01 or 1 and 0.05 preferably between 0.5 and 0.1 and can be fixed for each property.

The constraints over the choice of such mixtures ofN standards can also be equally fixed in the spectral area from which the samples will be drawn in order to remain in the areas of similar chemical nature.

The number of samples effectively drawn into the bank in this densification can be of several thousand generally 1000-2000. The calculation time is extended without significant deterioration in the results. If no further neighbours are found, the trawl of new samples drawn in is enlarged.

The spectrum of each mixture is calculated by the combination of the spectra of the standards used according to the formula

$$S_{Mi} = \Sigma C_{ij} X S_j \tag{6}$$

where $S_j$ is the spectrum in the mixture of component $_j$ in the calibration matrix.

The properties of each mixture PMi can be calculated by a generally linear combination of the properties of the standards according to the formula

$$P_{Mi} = \Sigma C_{ij} X P_j \tag{7}$$

where $P_j$ is the property of component j

In the case of non linear additive properties, appropriate mixing factors can be applied e.g. by blending factors or similar for density and viscosity.

Having obtained the spectrum and the properties of the synthetic mixtures, these can be used as "standards" to help control the process by keeping the properties constant in the same way as a conventional standard.

Instead of using either of the two above approaches, 1-7, a third type Procedure 3 may be used as follows. The Q nearest samples to unknown X can be found from a selection from the bank samples for which the proximity index to the unknown sample is (V) X $i_{min}$) where v is 0.1 < v < 10, (8) preferably 0.5<v<2 or 1$\leq$ v $\leq$5. Then by the method of least squares is found a generally linear combination of the standard products, which are the Q nearest samples, to reproduce the spectrum of X according to the equation.

$$S_x = \Sigma C_R \, X \, S_r \qquad (9)$$

where $C_r$ is the coefficient for sample R in the total Q and $S_R$ is the spectrum of sample R. The coefficient $C_R$ which can be normalized to $C_R = 1$ or not and/or optimized by the least squares route, allows an estimation of the property $P_X$ according to the equation.

$$P_X = \Sigma C_R X P_R \qquad (10)$$

where $P_R$ is the property of sample R.

The eventual size of the estimation error can be derived by application of Gaussian theory, also called the propagation error (see Eq.10).

The above third approach can only be applied if the product X is situated inside the maximum extension of the standard products defined by equation (8) i.e. within the range of bank samples defined in equation (8). If this is not the case, X is outside the field of the actual bank of products and escapes from the area of knowledge of the method into the area of learning.

The densification process described in relation to equations 4-7, or 9 or 10 is usually applied to the method of the invention involving no correlation or regression techniques. However, if desired the densification process may be applied to increase the number of "standards" for consideration in an NIR analytical technique involving the correlation on regression techniques as described above e.g. MLR. The present invention also provides a method for adding an extra synthetic standard to a bank of known standards, each of which relates at least one absorption in the 600-2600nm region (or a signal indicative thereof or of a mathematical function of said absorption eg a derivative thereof) of a known material to a known property related to that material, which method comprises choosing from the bank at least 2 standards for which equations 4 and 5 above are met, considering mixing the chosen standards in at least one proportion to produce at least one mixture for use as a synthetic standard, and estimating the spectrum and property/yield of said mixture according to equation 6 and 7 respectively.

The spectrum and property/yield of each "mixture" can then be added to the bank and used to develop models through the known correlation/regression approach, e.g. as described in the above mentioned patents.

As explained above if the nearest standard to the unknown is not one having the value $V_c$ for the property or yield, or having a value V for said property or yield within $\pm$ 10%, e.g. $\pm$ 5% or $\pm$ 1% of said value $V_c$, or if the function $i_{xm}/\Sigma D_{ix}$ is greater than the experimental error, especially more than 10%, 5% or 1% greater, then the process has deviated and needs adjustment, e.g. by changing one of the parameters of the process e.g. reaction conditions such as temperature, pressure, or amount/nature of catalyst for a reaction, or proportions or nature of the feeds in the case of a blending or reaction.

The method of the invention may be applied from the spectrum of a material to control the process to keep substantially constant the value of at least one physical, chemical, physicochemical and/or rheological property of that material, which may be a product of a chemical or physical or separation process, or which may be a feed to such a process, or the method can be used to control the process to keep substantially constant the value of at least one of said properties of a product of that process from the spectrum of at least one feed to that process, or to keep substantially constant the yield of at least one product of that process. Each of the feed (or feeds) or products to the process may be a solid liquid or gas preferably at least one feed or product is a liquid.

Thus the method may be used to control a process in relation to at least one feed or product used in or obtained by an industrial process of the refining of oil and/or in petrochemical operations. The process may be a hydrocarbon conversion or separation process, preferably a reforming or catalytic cracking or hydrotreatment process or distillation or blending. In particular it may be used to control a process to keep substantially constant at least one property of a feed and/or at least one property and/or yield of product from a number of different processes such as processes for separating petroleum products such as atmospheric distillation vacuum distillation or separation by distillation, under pressure greater than atmospheric, as well as thermal or catalytic conversion, with or without partial or total hydrogenation, of a petroleum product, such as catalytic cracking e.g. fluid catalytic cracking (FCC), hydrocracking, reforming, isomerization, selective hydrogenation, viscoreduction or alkylation.

Of particular value is the use of the method in blending operations involving control of the value of at least one property of a blend of liquid hydrocarbons (optionally with other additives such as alkyl ethers), this method including or not the determination for each constituent of the blend of a blend index for the property considered. In this method as applied to blending, the blend indices can be obtained simply by calculation and without the need for preparation of standard physical mixtures other than those contained in the databank. The blend indices can be combined linearly or non linearly within the fields of stability to determine from the value of this combination a value for at least one property of the blend obtained. The blend may be made by mixing at least 2 of butane, hydrogenated steamcracked gasoline, isomerate, reformate, MTBE or TAME, FCC derived gasoline.

Examples of properties of materials in processes controlled by the method of the invention include the following: for automobile fuels/gasolines, at least one of the Research Octane Number (RON), Motor Octane Number (MON) and/or their arithmetic mean, with or without lead additive and/or the methyl tert, butyl ether or methyl isoamyl ether and/or benzene content:

For automobile fuels/gasolines, at least one of the vapour pressure, density, volatility, distillation curve, e.g. percentage distilled at 70°C and/or 100°C, oxygen content or benzene or sulphur content, chemical composition and/ or gum content e.g. expressed in mg/100ml, and/or susceptibility to lead (these properties are particularly determined for use in blending operations):

For diesel fuels or gas oils, at least one of the cetane number (e.g. motor measured), cetane index, cloud point, "discharge point", filterability, distillation curve, density e.g. at 15°C, flash point, viscosity e.g. at 40°C, chemical composition, sensitivity to additives and percentage of sulphur;

For distillation products from crude oil e.g. under atmospheric pressure at least one of the density, percentage of sulphur, viscosity at 100°C, distillation curve, paraffin content, residual carbon content or Conradson carbon content, naphtha content, flash point for petrol, cloud point for gas oil e.g. light gas oil and/or viscosity at 100°C and/or sulphur content for atmospheric residues, and yield for at least one of the cuts, gasoline (bp 38-95°C), benzine (bp 95-149°C) naphtha bp 149-175°C, jet fuel bp 175-232°C, light gas oil bp 232-342°C, heavy gas oil bp 342-369°C, and atmospheric residue greater than 369°C.

For at least one of a feed or a product of a process of a catalytic cracking e.g. FCC process, at least one of the density, percentage of sulphur, aniline point, gas oil index, gasoline index, viscosity at 100°C, refractive index at 20°C and/or 60°C, molecular weight, distillation temperature e.g. 50% distillation temperature, percentage of aromatic carbon, content of total nitrogen and factors characterizing the suitability of the feed for the cracking e.g. KUOP, crackability factor, cokability factor, and yield e.g. of gas, gasoline, gas oil or residue. Thus there may be determined the yields and/or properties of the different products obtained by distillation of the cracked products, such as RON and/or MON, clear or leaded for the gasoline cut and the viscosity at 100°C for the distillation residue.

For at least one of a product or a feed of a catalytic reforming process, at least one of the density, distillation temperature and/or chemical composition (expressed as a percentage) of saturated linear hydrocarbon, isoparaffins, naphthenes, aromatics and olefins.

For at least one of a product or a feed of a process of hydrogenating gasoline at least one of the density, distillation temperature, RON and/or MON, clear or leaded vapour pressure, volatility, chemical composition (expressed as a percentage) of saturated linear hydrocarbons, isoparaffins, naphthenes, aromatics e.g. benzene, and mono/di substituted benzenes, olefins e.g. cyclic and non cyclic olefins, diolefins, the maleic anhydride index, and yield e.g. of at least one of the products obtained.

The method of the invention may also be used with chemical reactions in which at least one product is a hydrocarbon, and none of the feeds or products contains an element other than carbon or hydrogen. The hydrocarbon which may be gaseous or liquid at 25°C. Such reactions may involve as feed or product at least one olefin or acetylene e.g. linear or branched, aliphatic or cycloaliphatic olefin with an internal or external ethylenic unsaturation, preferably of 2-20 carbons especially 2-8 carbons for alkenes or alkynes (such as ethylene, propylene, butene I or 2, isobutene, isopentene) or acetylene, and 5-8 carbons for cycloalkenes e.g. cyclohexene. The feed or product may also be an aromatic hydrocarbon e.g. benzene or naphthalene, optionally substituted by at least one (e.g. 1-3) alkyl or alkenyl group e.g. of 1-20 carbons, such as 1-6 carbons, especially methyl, ethyl or isopropyl; examples are benzene, toluene xylene, cumene and styrene. The feed or product may also be a non aromatic hydrocarbon, e.g. linear or branched aliphatic or cycloaliphatic with e.g. 1-20 or 5-8 carbons respectively, preferably 1-6 carbons and 6 or 7 carbons respectively, examples are methane, ethane, propane, n-butane, isobutane, and cyclohexane. The feed or product may also be a diene, conjugated or unconjugated, aliphatic or cycloaliphatic with e.g. 4-20 carbons or 6-20 carbons respectively; examples are butadiene and isoprene and cyclohexadiene. Examples of the reactions are hydrogenation (e.g. butadiene to butene-1 or 2 or cyclohexene to cyclohexane) dehydrogenation (e.g. ethane to ethylene or ethyl benzene to styrene), isomerisation (e.g. butene-1 or -2 to isobutene, or pentene-1 to isopentene) alkylation (e.g. benzene with ethylene to form ethylbenzene and/or styrene, or isobutene with butane to form iso octane), and cracking.

In addition to the use in petrochemical operations, the method is of wider application and may be applied in the pharmaceutical industry such as the production of pharmaceutically active compounds for use as medicines e.g. by fermentation, and in the perfumery industry for making perfumes and fragances, especially in their blending and control thereof. The method may also be used in the food industry e.g. in brewing to control fermentation processes, in fermentation to make wine and quality control thereof, and control of food production e.g. sugar and water content in fruit juice and in control of maturing processes for fruits and vegetables. In each case the method may be applied to keep substantially constant the property of the sample tested or product from that sample e.g. a fermentation or blended product preferably on line and especially with continuous feed back from the results to control the production process.

The known correlative techniques for modelling physicochemical properties based on NIR spectra have disadvantages, the chief of which is the need for establishing a strong correlation between the spectrum and the property, and their difficulty in dealing with positive or negative synergy between components contributing to that property. In the case of high density polyethylene one multi linear regression model in respect of density gives a coefficient of correlation that can on occasion be insufficiently high, so as to give problems in a polymerization process based on it.

The method of the invention can avoid the above problems with correlations, and regression calculations.

The present invention also provides a control method, in which the process controlled is at least one of a polymerization, an oligomerization or an organic reaction in which at least one of the reactant and a product is a functionalized compound. The above method can be performed without regression or correlation techniques, e.g. between the absorption at any wavelength of the material and the property/yield.

The method of the present invention is applicable to chemical reactions, which may be polymerisations or oligomerisations, or alternatively reactions in which at least one of a reactant and a product is a functionalised compound. In the chemical reactions each of the feeds and the products may be a solid, liquid or gas, preferably all the feeds are liquids and/or gases, and preferably all the products are liquids and/or solids, especially liquids.

Examples of polymerisations are condensation and addition polymerisation. Condensation polymerisations may produce thermoset polymers, such as phenolic novolac or resole resins curing with or without curing agents like hexamine, or polyurethanes, or thermoplastic polymers such as polyamides, e.g. polylactams such as Nylon-6 and polymers from polyamines and polycarboxylic acids e.g. poly hexamethylene adipate, and polyesters, such as those from diols e.g. aliphatic diols and organo di carboxylic acids e.g. aromatic or aryl bis (alkylene) dicarboxylic acids, such as poly ethylene terephthalate. Addition polymerisations tend to produce thermoplastic polymers, and may be thermal or free radical or catalysed reactions e.g. with Bronsted or proton acids or metals, especially transition metals. Examples of such polymerisations are those involving polymerisation at an olefinic double bond or ring opening of an epoxide or episulphide. The olefinic double bond is preferably a vinyl group $CH_2=C-$ and may be in a hydrocarbon e.g. an olefin especially an alkene such as one of 2-12 carbons especially ethylene alone or mixed with at least one alpha olefin of 3-12 carbons (especially in amount of 0.5-30% by weight based on total olefins) such as propylene, butene-1, 4-methyl-pentene-1, hexene-1, octene-1 or styrene; copolymers of such olefinic hydrocarbons, especially ethylene, with non hydrocarbon comonomers e.g. esters with olefinic groups such as vinyl esters e.g. vinyl acetate or alkyl(meth)acrylate or vinyl chloride may also be made. Addition polymerisation of iso olefins e.g. of 4-8 carbons such as isobutene alone or with other comonomers such as butadiene is included, as in addition polymerisation of olefinic non hydrocarbon monomers such as vinyl esters e.g. of 3-20 carbons especially 4-10 carbons such as vinyl acetate and propionate, and alkyl(meth)acrylates wherein the alkyl group has 1-20 carbons, especially 1-4 carbons for solid polymers e.g. polymethyl methacrylate, and 4-20 carbons for polymers for use as pour point depressants and VI improvers e.g. polydodecyl acrylate and methacrylate and copolymers with 2-10 monomers of different alkyl chain lengths. Vinyl chloride homopolymers and copolymers e.g. with vinylidene chloride may also be made.

The method may also be used for ring opening reactions such as reactions of epoxides, episulphides or cyclic imines with organic compounds containing at least one active hydrogen such as compounds with at least one OH, NH or SH group, such as alcohols, phenols, primary or secondary amines or thiols. Alcohols e.g. of 1-30 carbons such as 2-6 carbons (e.g. butanol) especially alkanols or cycloalkanols are preferred. The epoxide is usually of 2-8 carbons e. g. ethylene oxide, propylene oxide, butylene oxide or cyclohexane oxide, while the episulphide and cyclic imines are preferably the corresponding analogues e.g. ethylene imine and ethylene sulphide.

In the case of polymerisation the method may be used to keep substantially constant the properties of the polymer made from the NIR spectrum of the feedstock (under constant conditions) or from the NIR spectrum of the product. Examples of properties are number and weight average molecular weights, and the molecular weight distribution, viscosity e.g. at 100°C, fluidity index, density, and chemical composition e.g. percentage of at least one monomer or comonomer in the polymer percentage of unsaturation e.g. ethylenic type, or side chain grouping, e.g. methyl, crystallinity, rigidity, flow parameters, draw strength at the flow threshold, free cracking resistance and shock resistance. In addition for polyisobutenes, the property may also be content of butene-1, and light and heavy polyisobutenes and unsaturation expressed in groups per litre and maleinisation index (or succinylation ratio) (sensitivity to Diels Alder reactions) as well as particular types of unsaturation e.g. vinylidene $CH_2=C-$ VIN, tri ($CH_3-C(CH_3)=CH<$) TRII, tri 2 (TRI2) ($CH_3-CH=C-$) TRITOT (R-CH=C<), TETRA (>C=C<). For polyolefins e.g. polyethylene, other properties include percentage of comonomer, volatile compounds and degree of conversion. For polyalkylenoxylated compounds e.g. ethylene oxide condensates e.g. with alcohols, the method may be used to monitor the degree of conversion or the amount of alkylene oxide consumed, as well as the quality of the product e.g. content of groups derived from at least one epoxide or the distribution of those groups in the polymer chain, the product weight and number average molecular weight and its distribution, proportions of low and high molecular weight products (e.g. 150-600 or 600-15000 such as 5000-12000 respectively) Hydroxyl index (or mean number of hydroxyl groups per molecule), percentage of primary secondary and tertiary hydroxyl groups, allylic or propylenic type unsaturation, or impurity content.

The method is of especial value in the polymerisation of ethylene alone or with at least one alpha olefin as described above. The process is usually catalysed by at least one transition metal catalyst especially of Group IVA, VA or VIA, of the Periodic Table, such as titanium, zirconium, vanadium and/or chromium. The catalysts may be organometallic (including II complexes), especially with the above transition metals, and may be in the presence of at least one organo aluminium cocatalyst as in Zeigler Natta catalysts. Non organometallic catalysts such as chromium oxide may be used. The catalyst may be unsupported or supported e.g. on silica and/or alumina.

The method may also be applied to organic chemical processes, which are not polymerisations (including oligomerisation); thus processes involving only monomeric starting materials and products are suitable. In particular these include processes in which at least one of a reactant and a product is a functionalised compound i.e. is not a hydrocarbon but contains at least one functional group, e.g. with at least one atom other than carbon and hydrogen, in particular at least one oxygen, nitrogen, sulphur, phosphorus, or halogen e.g. chlorine, bromine, iodine or fluorine atom, especially 1-3 such atoms in the compound. The functional group may be an alcohol, phenol, thiol, primary secondary or tertiary amine, aldehyde, ketone, ester, acid, amide, nitrile or ether or sulphide, or aromatic or aliphatic halide.

In particular the process may be a hydration such as an olefin to an alcohol (e.g. ethylene or propylene to ethanol or isopropanol respectively) dehydration such as an alcohol to an olefin (e.g. tert butanol to isobutene) etherification such as reaction of an alcohol or phenol with an olefin (e.g. tert butanol with isobutene to form Methyl tert butyl ether) or reaction of an olefin with water (e.g. ethylene to diethyl ether), esterification such as reaction of a carboxylic acid (or derivative thereof e.g. acid chloride) with an alcohol e.g. alkanol of 1-20 carbons) or with an olefin (e.g. ethylene, propylene or n or isobutene), such as reaction of acetic acid with ethylene to form ethyl acetate or with dehydrogenation) vinyl acetate. The process may also be an oxidation e.g. an alcohol or aldehyde to an acid such as methanol to formic acid, or a hydrocarbon to an alcohol or ketone or an acid e.g. naphtha to acetic acid or methane to formic acid or cumene to acetone and phenol, an ammoxidation e.g. an aliphatic substituted olefin (with optionally 3-6 carbons) to a nitrile such as propylene to acrylonitrile, or a carbonylation of an olefin or an alcohol to form a carboxylic acid and/or anhydride, such as the reaction of methanol with carbon monoxide to form acetic acid and/or anhydride.

The method may also be applied when the material X is a composition comprising part of a lubricating oil faction obtainable from a distillation of oil e.g. a vacuum distillation of oil.

This embodiment of the method of the present invention is applicable to various petroleum hydrocarbon fractions, which comprise part (and only part) of a lubricating oil fraction e.g. from a vacuum distillation of oil after removal of materials boiling above 370°C (under atmospheric pressure). Such fractions include the partly purified lube cut from the distillation, e.g. after at least one of the steps of dewaxing and dearomatizing and preferably both, (as in lube base oil) and the partly purified vacuum distillation residue e.g. after at least one of the steps of deasphalting, dewaxing and dearomatizing, and preferably all 3 (as in bright stock). Such fractions also include the aromatic extract of the lube oil cut or distillation residue, or a wax separated therefrom.

The method is preferably applied to control of production of lube base oils or bright stock. The base oil may be a 100-600 neutral or solvent or BS oil e.g. 100, 150, 200, 300, 400 or 500 neutral oil or BS solvent. It may have at least one of and preferably all of the following properties a density at 15°C of 0.80-0.95kg/l e.g. 0.85-0/92kg/l, a kinematic viscosity at 40°C of 10-1000cSt e.g. 15-700cSt, and at 100°C of 0.5-50cSt e.g. 1-40cSt, a Flash Point of 180°C min e.g. 190°C min, a pour point of 0°C maximum e.g. -5°C or -7°C maximum and a Viscosity Index of 80min e.g. 90min. The base oil may be present alone, or may be mixed with the aromatic extract as in process oils, which may have at least one of, and preferably all of the following properties, a density at 15°C of 0.95-1.10kg/l, e.g. 0.97-1.06kg/l, a Kinematic Viscosity at 40°C of at least 30cSt e.g. at least 37cSt, and at 100°C of at most 50cSt e.g. at most 45cSt and a Flash Point of at least 185°C e.g. 190°C min. The base oil may also be present mixed with at least one wax e. g. in amount of, 0-50% such as 1-40% or 15-35% by weight as in "slack wax", the mixture of oil and solid wax separated in the dewaxing step, or waxes as in the residue from the dearomatization step.

The base oil may also be mixed with at least one non hydrocarbon additive to boost its effectiveness for lubricant use. Types of additives which may each be present in amounts of 0.01-10% by weight (based on the weight of base oil) e.g. 0.1-1 % are (i) detergents/dispersants such as alkyl phenates and/or alkyl aryl sulphonates (ii) antioxidants such as phenol derivatives, (iii) viscosity index improvers and pour point depressants, such as alkyl poly(meth) acrylate homo and especially copolymers, styrene butadiene polymers and polyisobutylene (iv) anti corrosives, such as sulphur compounds, zinc sulphophosphates and dithiophosphates, and (v) solid or liquid lubricity additives, such as graphite, molybdenum disulphide and silicones.

The method may also be applied to the aromatic extract resulting from the extraction of aromatics (e.g. with furfural) from the lube cut of the vacuum distillate or the deasphalted vacuum residue. This aromatic extract is different from the base oil as it contains a much higher amount of aromatics, such as benzene, toluene and xylenes, and higher molecular weight aromatics e.g. of at least 30 carbons than the base oil. The aromatic extract may be used alone or mixed with an amount of base oil to form process oil.

The method may also be applied to solid or liquid paraffins or waxes e.g. as separated in a dewaxing step from the lube cut or the deasphalted residue. The wax may be mixed with base oil as in slack wax, or substantially free of base oil and may then if desired be further purified to produce a paraffin. Waxes may be used industrially while paraffins may be used for food and cosmetic uses.

The method is preferably applied for process control in a part of a refinery producing lubricants and by products therefrom.

Examples of properties whose values can be kept substantially constant for the various materials are as follows. Where the material is a base oil (or formulated oil) the property may be at least one of the density, sulphur content, Flash Point, Flow Point, kinematic viscosity at 40°C and at 100°C, Viscosity Index, aromatic carbon content, Polycyclic Aromatic hydrocarbon content, nitrogen base content, and inflammability according to Pensky Martens °C. When the material is a crude paraffin or slack wax, the property may be at least one of the density, viscosity e.g. at 40°C or 100°C and oil content. When the material is a process oil, the property may be at least one of the density, sulphur content, Polycyclic Aromatic hydrocarbon content, viscosity e.g. at 40°C or 100°C and the Flash Point e.g. Cleveland Flash Point.

In each of the above processes the control may be performed and notice taken of any deviations by adjusting the parameters of the process e.g. flow rates proportion or nature of feed(s) (e.g. via operation of control valves) and/ or temperature/pressure etc to bring the property or yield back to the desired figure. This control of the process, which may be a blending, separation or chemical e.g. polymerisation process, is usually performed with a micro computer which is linked to the spectrometer and also performs the search for the standards Sm. The inline control of the process is very efficient and very fast.

The present invention also provides an apparatus suitable for carrying out the method of the invention comprising an infra red spectrometer and a computer wherein the infra red spectrometer is linked to the computer programmed in such manner to determine the nearest standard, and this in turn is linked to a control means to adjust the process in response to any deviations when $S_{mc}$ is not the nearest standard. The spectrometer is suitable for measuring spectra in at least partly in the 600-2600nm wavelength range and can be linked to a signal processing device to allow numerical treatment of the spectrum, preferably by Fourier Transformation. The spectrometer receives at least one signal from a vessel containing product or from a feed or product line. The information obtained can be used as an information vector for the computer which is programmed to determine the nearest standard e.g. via calculations on the proximity indices in relation to standards. Conveniently in relation to the process, the computer may be used in a closed loop feed back or feed forward control system for controlling processing equipment e.g. changing the process parameters in response to variations in the nearest standard from measurement of more than one absorptions in the NIR spectrum of the product and/or feed.

The present invention also provides a computer programmed to perform the method of the invention. The apparatus for use with the former method of the invention comprises an NIR spectrometer receiving at least one signal from a feed or product line in said process and being coupled to a computer to effect continuous measurement of the spectra of the feed and/or product and provide feed back or feed forward control of the process. The present invention also provides a computer implemented method for a system including a spectrometer linked to a process line containing a material X, a computer linked to the spectrometer, and a controller linked to the computer and the process line, the computer including databanks having stored therein signals indicative of absorptions of standard materials (or mathematical functions thereof) and corresponding properties of said materials or products of said process for which X is a feed, or yield of said process, the method comprises steps of:

measuring absorption at more than one wavelength in the region 600-2600nm at the process line and producing absorption signals (or mathematical functions eg derivatives thereof) by the spectrometer in accordance therewith;
accessing the databanks of the computer in accordance with the absorption signals (or functions thereof);
comparing, by the computer, the absorption signals (or functions thereof) to the signals (or functions thereof) of the standard materials stored in the databanks;
choosing at least one standard based on the comparing, said standard having the smallest average value of the absolute difference at each wavelength i between the signal for the absorption (or function thereof) for the material and the signal (or function thereof) for the standards; and
controlling said process directly in accordance with the outputted standard, to ensure standard $S_{mc}$ is the one with the smallest average value.

The benefits of invention allow improvements in control of processes involving modelling with the following areas, identification and classification of novel products, simultaneous control of all of the properties on a sample without the need for generating different models for each. The method of the invention overcomes the difficulties with the classical regressional approach, in particular avoiding all difficulties with numerical stability of the models.

The method also allows an extension of the field of application of the method without the need to rewrite the model, apart from the need to integrate the new samples which are inside or outside the previous field of validity of the method. This possibility of automatic learning, which is not possessed by traditional regression techniques, is a decisive advantage in the framework of continuous inline industrial control processes, because it allows the return of the industrial plant operations to the model in a certain and rapid manner in a minimum time and with all the properties considered in the model. In contrast classical regression methods would necessitate the redevelopment of all the models, which is long and laborious without being able to guarantee the result of the new model obtained, because a new validation period is necessary; in addition during the redevelopment of the model any commercial use e.g. in a refinery of the model is very limited. Furthermore, the method of invention allows equally the easy extension to a number of properties, which are simply incorporated into the known bank.

This remarkable possibility is true not only for control of processes with conventional properties such as physical chemical and/or rheological properties, but also for complex ones (such as octane number). Also it is possible to quantify by the process the response or susceptibility to lead of automobile fuels as well as the response to additives such as nitrates, of fuels used in diesel engines. The methods of the invention equally allow application of the models from one apparatus to another and from one spectral region to another, where conventional regressive method cannot give satisfactory solutions. This apparatus portability is made possible by the fact that the differences between different spectra are the same in one apparatus as another, for the same type of spectrometer being considered (e.g. network scatter, Fourier transform, accousto optical system AOTS, diode array etc). This portability between spectral regions depends on the fact that as the spectral regions are intercorrelated, the relations between the spectra are maintained between one another.

The invention is illustrated in the accompanying Figures in which:

Figure 1 represents a schematic diagram showing apparatus for use in the invention;
Figure 2 represents a schematic block flow diagram for the method of the invention.

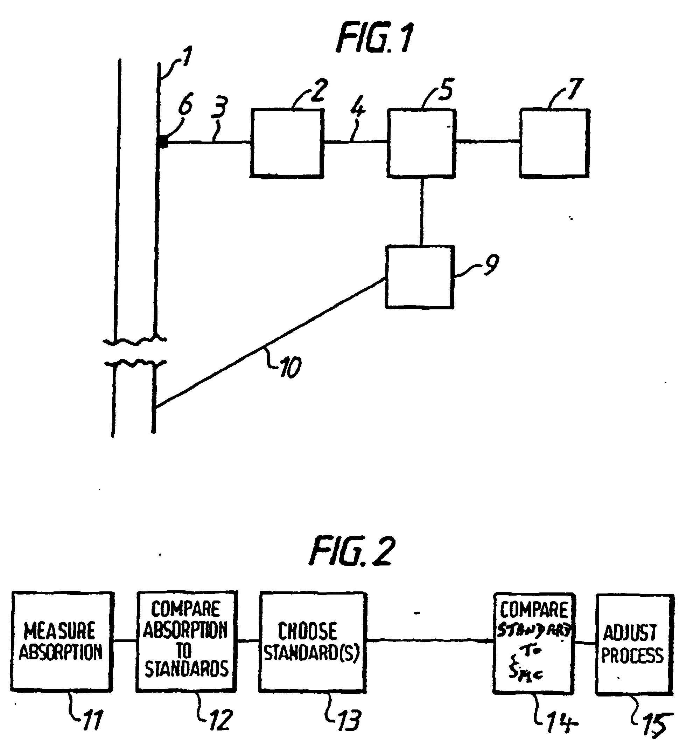

In Figure 1, an optical fibre 3 links a spectrometer 2 and a probe 6 in or at process line 1. The spectrophotometer 2 produces absorbance signals at more than 1 wavelength, which signals as such (or after mathematical treatment to form e.g. derivative signals) are passed via line 4 to computer 5, where the signals as such or after conversion e.g. to one or more derivative signals, are used to enable the computer to access the databank 7 of standard signals eg absorptions and properties/yields therein. The signals are compared to those of one or more standard absorption(s) as described above. The output of the computer 5 is in the form of a signal which is used to control the process involved with the product in line 1, ie for which line 1 is a feed or a product line; in this case the computer 5 is linked to and instructs the controller 9 which, via 10, controls that process eg. via valves/temperature and/or pressure controls in line 1 or in relation to line 1. By this means the property of material in line 1 or yield or property of product of the process from that material can be kept substantially constant without the need to determine that property or yield.

In Figure 2, the initial operation 11 is to measure the absorption of the unknown, after which in the second step 12, the absorptions are compared to absorptions in spectra of standards, and in the third step 13, the spectra of the standards Sm are chosen according to criteria described above, and then in step 14, if the standard $S_m$ chosen is not $S_{mc}$, in step 15 the process involving the unknown is adjusted to keep the standard chosen to be $S_{mc}$ and hence to keep the value of the property or yield substantially constant.

The invention is illustrated in the following Examples in which the Minimal Index is calculated according to the Minimal Index Procedure described above. Mathematically the steps concerned are as follows.

For each couple of standard samples i, j, the Proximity Index $i_{ij}$ is determined from the NIR spectra by use of equation 1, 2, or 3 and the properties are measured. For each Proximity Index is calculated the absolute difference $EP_{ij}$ between the properties of the samples. The Minimal Index for property P is obtained from the average ($EM_pL$) of $EP_{ij}$ for different values of L when L $\geq$ ij. Thus the $EM_p(L) = 1/K \, \Sigma_i \, \Sigma_j \, EP_{ij}$ for each of K samples for which $i_{ij} \leq L$.

EMp(L)+t$\sigma$(M) is plotted against the proximity index and in addition there is plotted the reproducibility of the standard method at a given level of confidence, as defined in the Minimal Index Procedure above. The intercept of the curve from EMpL and the reproducibility give the upper limit i.e. the Minimal Index.

For the Examples the data is expressed in Tables in a form as shown below in For each Proximity Index is calculated the absolute difference $EP_{ij}$ between the which the data is as follows.

| | | Absorption | | | | |
|---|---|---|---|---|---|---|
| | | Weighting | Unknown | Estimated | Standard A | Standard B |
| Proximity Index | | | | | | |
| Wavelength λ | | | | | | |
| cm$^{-1}$ | nm | | | | | |
| | | | | | | |
| | | | | | | |
| | | | | | | |
| Property l | | | | | | |
| Property j | | | | | | |
| Property m | | | | | | |

The wavelengths chosen are shown in columns 1 and 2.

Column 3 gives the weight loading associated with each wavelength for the proximity index for the standards; 1 denotes no loading.

Column 4 shows for the unknown sample the absorption at the various wavelengths and at the bottom the properties of that sample determined by standard methods.

Column 5 shows for the unknown sample the estimated values of the properties and the absorptions using the method of the invention based on the properties and absorptions of the chosen standards.

Columns 6, 7 etc show the values of the absorptions and properties for the standards chosen from the bank. Line 2 gives the value of the proximity index between the unknown sample and each of the chosen standards.

Example 1

(a) Production of an Unleaded Mixed Fuel from 6 Components

A target SUPER98 superfuel of the properties given in column 3 of Table 1a1, was to be obtained by mixing the remains of a tank of finished gasoline with 5 components, butane, hydrogenated steamcracked gasoline HEN, isomerate ISOM, reformate (REF) and MTBE in volume proportions 19.30%, 4.10%, 31.70%, 32.10%, 7.2% and 5.6% respectively. NIR absorptions at 4800-4000cm$^{-1}$ measured with a Fourier Transform spectrometer were measured, with a base line taken at 4780cm$^{-1}$ and absorbances normalized. Results are in Table 1a.

The 6 components were then mixed in the desired proportions, the mixing controlled by the method of the invention applied to the spectra from the components present (see Results in Table 1b). In the comparison with the bank of standards, the Minimum Index was 1 x 10$^{-4}$. 3 standards 1D, 1E, 1F were found with suitable proximity indices for which standards the average value of the properties corresponded to $V_c$, the desired value of the property of the target fuel. The blending process was controlled to maintain the 3 standards 1D, 1E, 1F as those with the suitable proximity indices and hence keep substantially constant the properties of the superfuel. For double checking the properties of the blend made and the properties estimated by averaging those from the standards 1D, 1E and 1F were compared; the differences are very small and in the area of reproducibility of the standard methods.

TABLE 1a

| NIR Spectra of Unleaded mixed fuel and base fuel and additives | | | | | | | | |
|---|---|---|---|---|---|---|---|---|
| | | SUPER FUEL | BASE FUEL | BUTANE | HEN | ISOM | MTBE | REF |
| $\lambda$(cm-1) | $\lambda$(nm) | | | | | | | |
| 4720 | 2119 | 0,0013833 | 0,0013286 | 0,00036614 | 0,0048746 | 0,00045176 | 0,00039505 | 0,0017899 |
| 4670 | 2141 | 0,015401 | 0,015696 | 0,00059139 | 0,035929 | 0,0018107 | 0,00079685 | 0,02742 |
| 4640 | 2155 | 0,014458 | 0,014786 | 0,0015483 | 0,03355 | 0,0020854 | 0,0019907 | 0,026581 |
| 4615 | 2167 | 0,021629 | 0,02193 | 0,002432 | 0,048472 | 0,0033787 | 0,0033645 | 0,035613 |
| 4585 | 2181 | 0,013173 | 0,013556 | 0,0039046 | 0,026822 | 0,0032492 | 0,0043356 | 0,028327 |
| 4485 | 2230 | 0,010699 | 0,010705 | 0,013768 | 0,01651 | 0,0057573 | 0,013241 | 0,012712 |
| 4480 | 2242 | 0,015318 | 0,015646 | 0,016717 | 0,018858 | 0,010108 | 0,027911 | 0,0181 |
| 4385 | 2281 | 0,094023 | 0,094638 | 0,10437 | 0,081125 | 0,095255 | 0,13276 | 0,084676 |
| 4332 | 2308 | 0,12974 | 0,13083 | 0,14701 | 0,094876 | 0,1474 | 0,18122 | 0,11297 |
| 4305 | 2323 | 0,10626 | 0,10476 | 0,12279 | 0,093425 | 0,11861 | 0,063885 | 0,10927 |
| 4260 | 2347 | 0,10094 | 0,098881 | 0,11439 | 0,088133 | 0,11705 | 0,074657 | 0.090487 |
| 4210 | 2375 | 0,065672 | 0,065902 | 0,074313 | 0,054295 | 0,072316 | 0,091152 | 0,058007 |
| 4170 | 2398 | 0,065289 | 0,065063 | 0,057805 | 0,049811 | 0,074797 | 0,095725 | 0,05451 |
| 4135 | 2418 | 0,069147 | 0,068664 | 0,079882 | 0,046235 | 0,085847 | 0,083448 | 0,049259 |
| 4105 | 2436 | 0,068641 | 0,087702 | 0,089697 | 0,050826 | 0,082082 | 0,06768 | 0,053229 |
| 4060 | 2463 | 0,10677 | 0,10794 | 0,0875 | 0,12437 | 0,099989 | 0,076993 | 0,12989 |
| 4040 | 2475 | 0,10145 | 0,10197 | 0,083674 | 0,13189 | 0,079524 | 0,081235 | 0,10917 |
| | | | | | | | | |
| RON clear | | 99,1 | | | | | | |
| MON clear | | 88,2 | | | | | | |
| Vapour Pressure | | 731,74 | | | | | | |
| Volatilite | | 985 | | | | | | |

EP 0 801 299 B1

TABLE 1a (continued)

| NIR Spectra of Unleaded mixed fuel and base fuel and additives | | | | | | | | |
|---|---|---|---|---|---|---|---|---|
| | | SUPER FUEL | BASE FUEL | BUTANE | HEN | ISOM | MTBE | REF |
| λ(cm-1) | λ(nm) | | | | | | | |
| %Dist 100°c | | 49,93 | | | | | | |
| %Dist 70°c | | 34.4 | | | | | | |

EP 0 801 299 B1

TABLE 1b

| Comparison of the result obtained via blending and those of the product obtained | | | | | | | |
|---|---|---|---|---|---|---|---|
| | | Weight | Product | | 1D | 1E | 1F |
| | | | Made | Estimated | | | |
| Proximity index | | | | 0,000027526 | 0,000067452 | 0,000072577 | 0,000096807 |
| | | | | | | | |
| λ (cm-1) | λ (nm) | | | | | | |
| 4720 | 2119 | 1 | 0,0021031 | 0,0021115 | 0,0021985 | 0,0020678 | 0.0020683 |
| 4670 | 2141 | 1 | 0,01696 | 0,016887 | 0,017029 | 0,016831 | 0,016801 |
| 4640 | 2155 | 1 | 0,016172 | 0,016464 | 0,017171 | 0,015695 | 0,016527 |
| 4615 | 2167 | 1 | 0,023426 | 0,022955 | 0,022671 | 0,022765 | 0,023429 |
| 4585 | 2181 | 1 | 0,014407 | 0,014379 | 0,014241 | 0,014863 | 0.014034 |
| 4485 | 2230 | 1 | 0,011377 | 0,011472 | 0,011516 | 0,011788 | 0,011112 |
| 4460 | 2242 | 1 | 0,015794 | 0,015825 | 0,015718 | 0,015331 | 0,016428 |
| 4385 | 2281 | 1 | 0,092392 | 0,090762 | 0,09071 | 0,092874 | 0,088701 |
| 4332 | 2308 | 1 | 0,127 | 0,12402 | 0,12292 | 0,1241 | 0,12505 |
| 4305 | 2323 | 1 | 0,10482 | 0,10678 | 0,1021 | 0,10946 | 0,10879 |
| 4260 | 2347 | 1 | 0,10001 | 0,099412 | 0,098621 | 0,095524 | 0,10409 |
| 4210 | 2375 | 1 | 0,065489 | 0,06726 | 0,067463 | 0,066664 | 0,067653 |
| 4170 | 2398 | 1 | 0,063954 | 0,06449 | 0,066434 | 0,064491 | 0,062546 |
| 4135 | 2418 | 1 | 0,066992 | 0,067348 | 0,065523 | 0,067075 | 0,069445 |
| 4105 | 2436 | 1 | 0,066911 | 0,066291 | 0,066551 | 0,064987 | 0,067336 |
| 4060 | 2463 | 1 | 0,10946 | 0,11196 | 0,11349 | 0,11337 | 0,10903 |
| 4040 | 2475 | 1 | 0,10273 | 0,10157 | 0,10564 | 0,10211 | 0,096959 |
| | | | | | | | |
| | | | Measured standards | | | | |
| RON clear | | | 99,4 | 99.2 | | | |
| MON clear | | | 88,4 | 88,2 | | | |
| Vapour Pressure | | | 700 | 705.0 | | | |
| Volatility | | | 980 | 975,0 | | | |
| %Dist 100°C | | | 58 | 54,7 | | | |
| %Dist 70°C | | | 36,8 | 37 | | | |

Example 2

On line control, based on NIR spectra on a mixture of crude oils fed to an atmosphere distillation unit, of yields and properties of the different distillation cuts such as gasoline (38-95°C) benzine (95-149°C) naphtha (149-175°C, jet fuel (175-232°C) light gas oil (232-242°C) heavy gas oil (342-369°C) and atmospheric residue (bp).369°C).

An atmospheric distillation unit in a refinery was fed with a charge 2C which was a mixture in wt% of the following crudes, RUMASHKINO 81%, Iranian Heavy 18%, Iranian light 1%.

Yields of various distillation cuts were desired, the boiling ranges being given above, as well as key properties of each cut as described in Table 2, NIR spectra were measured as in Ex 1 on the crude oil. Min. Index was determined from NIR spectra on standard crude oil (as described above) and was 2.6x10[-6]. The method of the invention was applied using Procedure 3 and equation 8, in which v was 1, to the bank which was sufficiently dense for 2 standards 2A and 2B to be found with small enough proximity indices. These standards contained (wt%) (for 2A) Romashkino 52% Iranian Heavy 29%. Arabian Heavy 11%, Kuwait 4%, Arabian light 2% and Iranian light 2%) and (for 2B) Iranian Heavy 78%, Romashkino 21% and Arabian Heavy 1%. The data in Table 2 shows the observed properties as well as the yields of the cuts and their properties. The conditions in the distillation unit were maintained in order to keep the 2 standards 2A and 2B as those with small enough proximity indices and hence to keep the properties and yields of the products substantially constant. To double check the process, the properties of standards, estimated (averaged) yields, properties of the products and actual yields were compared, the differences observed being in accordance with standard methods of measurement.

TABLE 2

| Determination of yields and properties of cuts from distillation of mixture of crude feed oils | | | | | | |
|---|---|---|---|---|---|---|
| | | Weight | Charge 2C | | | |
| | | | Measured | Estimated | 2A | 2B |
| | Proximity Index | | | 9,98E-07 | 1,21E-06 | 1,33E-06 |
| | | | | | | |
| λ(cm-1) | λ(nm) | | | | | |
| 4672 | 2140,4 | 1 | 0,001777942 | 0,001748627 | 0,001771733 | 0,00172552 |
| 4640 | 2155,2 | 1 | 0,003139917 | 0,003211964 | 0,003256211 | 0,003167717 |
| 4616 | 2166,4 | 1 | 0,00377911 | 0,003827795 | 0,003835639 | 0,003819952 |
| 4584 | 2181,5 | 1 | 0,003794844 | 0,003797791 | 0,003829737 | 0,003765845 |
| 4484 | 2230,2 | 1 | 0,006094959 | 0,00614454 | 0,006272386 | 0,006016694 |
| 4460 | 2242,2 | 1 | 0,009258476 | 0,009155818 | 0,009276757 | 0,009034879 |
| 4384 | 2281 | 1 | 0,078089814 | 0,077898738 | 0,077667019 | 0,078130457 |
| 4332 | 2308,4 | 1 | 0,15773336 | 0,157794497 | 0,157793411 | 0,157795584 |
| 4304 | 2323,4 | 1 | 0,104631107 | 0,1045241 | 0,104179066 | 0,104889135 |
| 4260 | 2347,4 | 1 | 0,130690546 | 0,130249322 | 0,130445176 | 0,130053468 |
| 4208 | 2376,4 | 1 | 0,087815393 | 0,087751054 | 0,087838988 | 0,08766312 |
| 4172 | 2396,9 | 1 | 0,091208037 | 0,090879399 | 0,090878774 | 0,090880025 |
| 4132 | 2420,1 | 1 | 0,084648925 | 0,084706329 | 0,08465164 | 0,084761019 |
| 4104 | 2436,6 | 1 | 0,0824855 | 0,082364989 | 0,082389016 | 0,082340962 |
| 4060 | 2463,1 | 1 | 0,087068028 | 0,087578898 | 0,087475 | 0,087682795 |
| 4040 | 2475,2 | 1 | 0,067784043 | 0,068366138 | 0,068439449 | 0,068292827 |
| Density 15°C | | | 0,8863 | 0,86555 | 0,8646 | 0,8665 |
| % Gasoline | | | 7,4 | 7,4 | 7,4 | 7,4 |
| % Benzine | | | 7,6 | 7,2 | 7,3 | 7,2 |
| % Naphta | | | 4,3 | 4,5 | 4,5 | 4,5 |
| % Petrol | | | 8,5 | 8,5 | 8,6 | 8,4 |
| % light gas oil LGO | | | 18,9 | 18,8 | 19,2 | 18,5 |

TABLE 2   (continued)

| Determination of yields and properties of cuts from distillation of mixture of crude feed oils | | | | | | |
|---|---|---|---|---|---|---|
| | | Weight | Charge 2C | | | |
| λ(cm-1) | λ(nm) | | | | | |
| % Heavy gas oil | | | 4,5 | 4,5 | 4,6 | 4,4 |
| % Residue RAT | | | 49 | 49,2 | 48,6 | 49,8 |
| % Paraffines Naphta | | | 52,2 | 52,1 | 53.1 | 51,2 |
| Flash Point Petrol | | | 59,2 | 59,5 | 59,8 | 59,3 |
| Cloud point LGO | | | -8,1 | -8,1 | -8,8 | -7,5 |
| % Sulphur RAT | | | 2,8 | 2,8 | 2,8 | 2,9 |
| Viscosity 100°C RAT | | | 53,16 | 52,72 | 48,53 | 56,91 |

Example 3

Control of an FCC unit from a Feed

The NIR spectrum of the above feed 3D was measured at 4800-4000cm$^{-1}$, with base line at 4780 cm$^{-1}$, normalisation of the spectrum and no weighting. The procedure 3 was used with equation 8, with v = 1, and the Min. Index of 2.5 x 10-6 the latter having been previously calculated as described above from NIR spectra on standard FCC feeds of known properties.

The cracking unit operated under the following conditions: riser inlet temperature 250°C, riser outlet temperature 525°C, MHSV (Mass Hourly Space Velocity) 78 kg/h per kg, C/O ratio 6.6, activity of catalyst 65 (in Microactivity Test).

The cracking gave a gasoline cut defined by ASTM distillation with initial point of 38°C and 90% distilled at 190°C and a residue defined by ASTM distillation with 10% distilling at 385°C.

By application of Procedure 3 to the bank of samples of FCC feeds 2 standards were found namely 3A, 3B. The cracking process was controlled to keep these 2 standards as those with the smallest proximity indices. To cross check the yields of products were determined experimentally and also estimated by averaging from the standards. The properties and yields estimated as shown in Table 3. The results were all in line with the accuracy based on the reference methods, as well as in line with the properties and yields actually measured.

TABLE 3

| Yields and properties of products from FCC reactor | | | | | | |
|---|---|---|---|---|---|---|
| | | Weight | Feed 3D | | 3A | 3B |
| | | | Measured | Estimated | | |
| | Proximity Index | | | 1,10E-06 | 1,28E-06 | 1,30E-06 |
| | | | | | | |
| λ (cm-1) | λ (nm) | | | | | |
| 4720 | 2118,6 | 1 | 0,00024017 | 0,000283004 | 0,000238346 | 0,000327662 |
| 4672 | 2140,4 | 1 | 0,002238801 | 0,002010364 | 0,001890879 | 0,00212985 |
| 4640 | 2155,2 | 1 | 0,004237234 | 0,003903227 | 0,003874117 | 0,003932336 |
| 4612 | 2168,3 | 1 | 0,005237444 | 0,004972667 | 0,004866233 | 0,005079102 |
| 4584 | 2181,5 | 1 | 0,005332797 | 0,005055095 | 0,005031089 | 0,005079102 |
| 4484 | 2230,2 | 1 | 0,007970887 | 0,007756354 | 0,007744263 | 0,007768446 |
| 4460 | 2242,2 | 1 | 0,011303264 | 0,011210967 | 0,011212199 | 0,011209736 |

TABLE 3   (continued)

| | | Weight | Feed 3D | | 3A | 3B |
|---|---|---|---|---|---|---|
| λ (cm-1) | λ (nm) | | | | | |
| 4384 | 2281 | 1 | 0,072994455 | 0,07273491 | 0,07292398 | 0,072545839 |
| 4332 | 2308,4 | 1 | 0,152067643 | 0,152159348 | 0,151945649 | 0,152373047 |
| 4304 | 2323,4 | 1 | 0,100517606 | 0,100397569 | 0,100601923 | 0,100193214 |
| 4260 | 2347,4 | 1 | 0,131209247 | 0,131514201 | 0,131487607 | 0,131540794 |
| 4212 | 2374,2 | 1 | 0,091618024 | 0,091623192 | 0,091564633 | 0,091681751 |
| 4168 | 2399,2 | 1 | 0,094011773 | 0,094322962 | 0,09427582 | 0,094370104 |
| 4132 | 2420,1 | 1 | 0,086184908 | 0,086675314 | 0,086678538 | 0,08667209 |
| 4104 | 2436,6 | 1 | 0,081457005 | 0,081916022 | 0,081981133 | 0,081850912 |
| 4060 | 2463,1 | 1 | 0,084267922 | 0,084318052 | 0,084444043 | 0,08419206 |
| 4040 | 2475,2 | 1 | 0,06911082 | 0,069146752 | 0,069239547 | 0,069053957 |

Yields and properties of products from FCC reactor"

Example 4

On line Control of Polybutenes Production

It is desired to control the properties of polybutenes made during their manufacture by adapting immediately the operating conditions to any changes in any product.

They were made by polymerisation of isobutene with an Bronsted acid catalyst to form a crude product from which distillation removes gaseous hydrocarbons and light polymeric products, and leaves heavy polyisobutene.

During the manufacture, the absorbances of heavy polyisobutene (Ref 4A) were measured with an NIR spectrometer in the wavelength region 6000-8850cm$^{-1}$. The spectrometer had been installed on line in a plant with the aid of a fast side loop situated in the line carrying the heavy polymer remaining after the distillation. An analyser attached to the spectrometer sent within 2 minutes to the controller of the plant a signal relating to the proximity indices with respect to standards.

The method chosen to treat the NIR spectrum involved a discrete selection of wavelengths chosen on the basis of chemical and/or statistical criteria, the chosen wavelengths being between 6079 and 8803cm,$^{-1}$. The absorbances were normalised according to procedure (2).

For a series of standard polyisobutene products, for which the NIR spectra were known, the Minimum Proximity Index was obtained by the method above to be $5 \times 10^{-6}$; this Index was not weighted. The proximity indices, between the absorbances of the standards in the bank and those of the unknown from the plant (normalised as above) were calculated and 5 standards 4B-4F were found with proximity indices < Min. Prox. Index.

The plant was controlled to keep the 5 standards those with the lowest proximity indices. Checking of the process was performed, by averaging the values of each property of those 5 standards in order to calculate the properties for the product namely the viscosity at 100°C, the number average molecular weight (MN), size of the distribution of molecular weights obtained by gel permeation chromatography (called LGPC) as well as the content of butene-1

(BUT-1).

Table 4 shows the results, from which it is clear that the calculated properties (in col 5) were all in agreement with those measured on the unknown by standard methods and were within the limits of reproducibility of those methods for use in the polyisobutene area (on the basis of a 95% probability in any measurement) namely 0.7% for viscosity (ASTM D445), 8.5°C for inflammability point (ASTM D93-80), 5% for number average Molecular Weight and 3% for Molecular Weight distribution (both by Gel Permeation Chromatography), 10% for unsaturation (NMR) and for butene-1 (IR) and 1% for maleinisation index.

Example 5

Control of Production of Low Molecular Weight Polyisobutene

The principles of Example 4 were applied to control the manufacturing unit for production of a low molecular weight polyisobutene (5A). The method adopted was as in Example 4 with the absorbances of the polyisobutene measured as before in the 6000-8850cm$^{-1}$ wavelength range with the aid of the NIR spectrometer installed on the residue line from the distillation unit.

The properties of the product to be kept substantially constant were the viscosity at 100°C, the number average molecular weight, the LGPC (as in Ex.4), the content of butene-1, the inflammability point (IP) and the degree of unsaturation expressed in groups/litre, and the maleinisation index (PIBSA). The unsaturations were of the types VIN, TRII, TRI2, TRI2cis, TRI2trans, TRITotal and TETRA as defined above. The maleinisation index is particularly important for control of plants to make polyisobutenes as it is of great value to purchasers of low polyisobutenes.

The NIR spectra of a series of standard polyisobutenes whose properties were measured by reference techniques, were determined and from the bank obtained the Minimal Index was determined at 9x10$^{-5}$, via the unweighted proximity indices. The density of standards in the Bank was sufficiently high for there to be 5 standards 5B-5F inside the sphere with proximity indices with respect to the unknown less than the Minimal Index. The operating process was controlled to keep these 5 standards the ones in the lowest proximity indices. To check, the properties of the product were determined, by averaging the data from these standards. The results are shown in Table 5.1. The properties of the polyisobutene from the plant calculated from the standards were all within the limits of reproducibility of the standard methods. Thus continuously and with total reliability, the quality of product from the plant can thus be obtained and can be maintained taking account of the process dynamics.

TABLE 4

| On line Control of the Properties of a High MW Polyisobutene | | | | | | | | | |
|---|---|---|---|---|---|---|---|---|---|
| | | Wt | 4A | | 4B | 4C | 4D | 4E | 4F |
| | Prox. Index | | Measured | Estimated | 2,28E-07 | 2,41E-07 | 3,17E-07 | 4,99E-07 | 5,05E-07 |
| Wavelength | | | | | | | | | |
| $\lambda_{(cm-1)}$ | $\lambda_{(nm)}$ | | | | | | | | |
| 6079 | 1645 | 1 | 0,034526 | 0,0345348 | 0,03445 | 0,034579 | 0,034566 | 0,034566 | 0,034513 |
| 6109 | 1637 | 1 | 0,033387 | 0,0334816 | 0,033343 | 0,033452 | 0,033511 | 0,033514 | 0,033588 |
| 6165 | 1622 | 1 | 0,031521 | 0,0316246 | 0,031567 | 0,031568 | 0,031642 | 0,031691 | 0,031655 |
| 6200 | 1613 | 1 | 0,029482 | 0,0295274 | 0,029529 | 0,029419 | 0,029577 | 0,029578 | 0,029534 |
| 6215 | 1609 | 1 | 0,028092 | 0,0281402 | 0,028072 | 0,028047 | 0,028148 | 0,028212 | 0,028222 |
| 6262 | 1597 | 1 | 0,022757 | 0,0227916 | 0,022708 | 0,02274 | 0,02287 | 0,022827 | 0,022813 |
| 6418 | 1558 | 1 | 0,009918 | 0,0099332 | 0,009884 | 0,009823 | 0,010043 | 0,009945 | 0,009971 |
| 6532 | 1531 | 1 | 0,008198 | 0,0082184 | 0,008228 | 0,008124 | 0,008355 | 0,008288 | 0,008097 |
| 6649 | 1504 | 1 | 0,013928 | 0,0139594 | 0,013956 | 0,013878 | 0,01398 | 0,014021 | 0,013962 |
| 6698 | 1493 | 1 | 0,018189 | 0,0181368 | 0,018174 | 0,018078 | 0,018188 | 0,018186 | 0,018058 |
| 6821 | 1466 | 1 | 0,023312 | 0,0233096 | 0,023296 | 0,023313 | 0,02329 | 0,02332 | 0,023329 |
| 6901 | 1449 | 1 | 0,03066 | 0,03061 | 0,030665 | 0,030627 | 0,030622 | 0,03062 | 0,030516 |
| 6925 | 1444 | 1 | 0,032947 | 0,0329416 | 0,032984 | 0,032945 | 0,032842 | 0,032927 | 0,03301 |
| 6964 | 1436 | 1 | 0,034095 | 0,0340834 | 0,034175 | 0,034129 | 0,03404 | 0,034121 | 0,033952 |
| 6998 | 1429 | 1 | 0,033036 | 0,0330732 | 0,033113 | 0,033051 | 0,033061 | 0,033057 | 0,033084 |
| 7052 | 1418 | 1 | 0,037285 | 0,0373202 | 0,037367 | 0,037376 | 0,03725 | 0,037374 | 0,037234 |
| 7062 | 1416 | 1 | 0,038945 | 0,0389808 | 0,039025 | 0,039019 | 0,038891 | 0,038957 | 0,039012 |
| 7092 | 1410 | 1 | 0,042821 | 0,0429034 | 0,042882 | 0,042993 | 0,042821 | 0,042866 | 0,042955 |
| 7148 | 1399 | 1 | 0,050224 | 0,0501864 | 0,050162 | 0,050204 | 0,05023 | 0,050197 | 0,050139 |
| 7158 | 1397 | 1 | 0,05171 | 0,0516546 | 0,051583 | 0,051672 | 0,051573 | 0,051668 | 0,051777 |
| 7199 | 1389 | 1 | 0,055328 | 0,0552568 | 0,055321 | 0,055251 | 0,055274 | 0,055195 | 0,055243 |

TABLE 4   (continued)

| | | Wt | 4A | | 4B | 4C | 4D | 4E | 4F |
|---|---|---|---|---|---|---|---|---|---|
| **On line Control of the Properties of a High MW Polyisobutene** | | | | | | | | | |
| | Prox. Index | | Measured | Estimated | 2,28E-07 | 2,41E-07 | 3,17E-07 | 4,99E-07 | 5,05E-07 |
| Wavelength | | | | | | | | | |
| $\lambda_{(cm-1)}$ | $\lambda_{(nm)}$ | | | | | | | | |
| 7220 | 1385 | 1 | 0,055837 | 0,055829 | 0,055823 | 0,055857 | 0,055805 | 0,055755 | 0,055905 |
| 7231 | 1383 | 1 | 0,05578 | 0,0557724 | 0,055758 | 0,055782 | 0,055802 | 0,055606 | 0,055914 |
| 7262 | 1377 | 1 | 0,053775 | 0,053733 | 0,053785 | 0,053713 | 0,0538 | 0,053595 | 0,053772 |
| 7294 | 1371 | 1 | 0,048604 | 0,0484784 | 0,048495 | 0,048516 | 0,048501 | 0,048403 | 0,048477 |
| 7331 | 1364 | 1 | 0,040558 | 0,0405078 | 0,040492 | 0,040581 | 0,040499 | 0,040494 | 0,040473 |
| 7348 | 1361 | 1 | 0,036912 | 0,0369442 | 0,036891 | 0,036937 | 0,036791 | 0,036849 | 0,036753 |
| 7375 | 1356 | 1 | 0,028832 | 0,028823 | 0,028885 | 0,028916 | 0,028736 | 0,028825 | 0,028753 |
| 7402 | 1351 | 1 | 0,01934 | 0,0193446 | 0,019389 | 0,019411 | 0,019293 | 0,019343 | 0,019287 |
| 7899 | 1266 | 1 | 0,002143 | 0,0020506 | 0,002127 | 0,002037 | 0,002131 | 0,002039 | 0,001919 |
| 8000 | 1250 | 1 | 0,006563 | 0,0066608 | 0,00675 | 0,006643 | 0,006601 | 0,006705 | 0,006605 |
| 8097 | 1235 | 1 | 0,017014 | 0,0170314 | 0,016928 | 0,017022 | 0,01693 | 0,017118 | 0,017159 |
| 8197 | 1220 | 1 | 0,033957 | 0,033925 | 0,033887 | 0,033884 | 0,033837 | 0,034041 | 0,033976 |
| 8217 | 1217 | 1 | 0,037243 | 0,0373344 | 0,037337 | 0,037276 | 0,037258 | 0,037459 | 0,037342 |
| 8251 | 1212 | 1 | 0,043473 | 0,043491 | 0,043447 | 0,043397 | 0,043469 | 0,043609 | 0,043533 |
| 8278 | 1208 | 1 | 0,048882 | 0,0488738 | 0,048886 | 0,048835 | 0,048753 | 0,049003 | 0,048892 |
| 8333 | 1200 | 1 | 0,080806 | 0,080871 | 0,080945 | 0,080719 | 0,080878 | 0,080894 | 0,080919 |
| 8361 | 1196 | 1 | 0,0924 | 0,0924876 | 0,092499 | 0,092582 | 0,092447 | 0,092511 | 0,092399 |
| 8375 | 1194 | 1 | 0,091802 | 0,0918924 | 0,091893 | 0,091891 | 0,091957 | 0,091803 | 0,091918 |
| 8382 | 1193 | 1 | 0,090957 | 0,090951 | 0,090973 | 0,090952 | 0,090913 | 0,090875 | 0,091042 |
| 8403 | 1190 | 1 | 0,088076 | 0,0879942 | 0,087981 | 0,088052 | 0,0881 | 0,087893 | 0,087945 |
| 8418 | 1188 | 1 | 0,086503 | 0,0865104 | 0,086496 | 0,086468 | 0,086638 | 0,086372 | 0,086578 |

TABLE 4   (continued)

| | | Wt | 4A | | 4B | 4C | 4D | 4E | 4F |
|---|---|---|---|---|---|---|---|---|---|
| **On line Control of the Properties of a High MW Polyisobutene** | | | | | | | | | |
| | Prox. Index | | Measured | Estimated | 2,28E-07 | 2,41E-07 | 3,17E-07 | 4,99E-07 | 5,05E-07 |
| Wavelength | | | | | | | | | |
| $\lambda_{(cm-1)}$ | $\lambda_{(nm)}$ | | | | | | | | |
| 8503 | 1176 | 1 | 0,068153 | 0,0681298 | 0,068144 | 0,068087 | 0,06819 | 0,068083 | 0,068145 |
| 8540 | 1171 | 1 | 0,058772 | 0,0587116 | 0,058757 | 0,058746 | 0,058828 | 0,058655 | 0,058572 |
| 8598 | 1163 | 1 | 0,043961 | 0,0439804 | 0,043948 | 0,043992 | 0,043996 | 0,043947 | 0,044019 |
| 8658 | 1155 | 1 | 0,035651 | 0,0355848 | 0,035646 | 0,035571 | 0,03557 | 0,035569 | 0,035568 |
| 8703 | 1149 | 1 | 0,031642 | 0,0315346 | 0,03152 | 0,031638 | 0,031491 | 0,031545 | 0,031479 |
| 8726 | 1146 | 1 | 0,02824 | 0,028269 | 0,028194 | 0,02837 | 0,028297 | 0,028232 | 0,028252 |
| 8803 | 1136 | 1 | 0,013764 | 0,0137152 | 0,013641 | 0,013837 | 0,013715 | 0,013645 | 0,013738 |
| | VISCOSITY | | 4717 | 4708,2 | 4669 | 4783 | 5005 | 4484 | 4600 |
| | MN | | 2991 | 3031,4 | 3026 | 3016 | 3214 | 2930 | 2971 |
| | LGPC | | 1,81 | 1,812 | 1,80 | 1,82 | 1,78 | 1,84 | 1,82 |
| | BUT-1 | | 1,68 | 1,6298 | 1,62 | 1,4 | 1,669 | 1,66 | 1.8 |

In this Table 1.56E-07 means $1.56 \times 10^{-7}$

TABLE 5

| | | Wt | 5A | | 5B | 5C | 5D | 5E | 5F |
|---|---|---|---|---|---|---|---|---|---|
| **On line Control of the Properties of a Polyisobutene of Low Mol. Wt.** | | | | | | | | | |
| | | | Measured | Estimated | | | | | |
| | Prox. Index | | | 4,34E-07 | 2,28E-07 | 8,65E-07 | 9,18E-07 | 1,07E-06 | 1,68E-06 |
| Wavelength | | | | | | | | | |
| $\lambda$(cm-1) | $\lambda$(nm) | | | | | | | | |
| 6079 | 1845 | 1 | 0,03487 | 0,0350224 | 0,034809 | 0,035186 | 0,034927 | 0,03502 | 0,035191 |
| 6109 | 1637 | 1 | 0,033505 | 0,0336706 | 0,033428 | 0,033829 | 0,033536 | 0,033725 | 0,033835 |
| 6165 | 1622 | 1 | 0,029542 | 0,0296054 | 0,029568 | 0,029806 | 0,029475 | 0,029625 | 0,029553 |
| 6200 | 1613 | 1 | 0,026851 | 0,02668 | 0,026667 | 0,026958 | 0,026525 | 0,026706 | 0,026544 |
| 6215 | 1609 | 1 | 0,025316 | 0,025199 | 0,025198 | 0,025414 | 0,025055 | 0,025241 | 0,025087 |
| 6262 | 1597 | 1 | 0,020251 | 0,0201638 | 0,020177 | 0,020325 | 0,020046 | 0,020202 | 0,020069 |
| 6418 | 1558 | 1 | 0,008942 | 0,00905 | 0,009014 | 0,009098 | 0,009048 | 0,009074 | 0,009016 |
| 6532 | 1531 | 1 | 0,007916 | 0,0080262 | 0,007969 | 0,008029 | 0,008046 | 0,008052 | 0,008035 |
| 6649 | 1504 | 1 | 0,014038 | 0,0141226 | 0,014057 | 0,014102 | 0,014121 | 0,014208 | 0,014125 |
| 6698 | 1493 | 1 | 0,01827 | 0,0183048 | 0,018253 | 0,01832 | 0,018273 | 0,018369 | 0,018309 |
| 6821 | 1466 | 1 | 0,023637 | 0,0238628 | 0,023648 | 0,023639 | 0,023669 | 0,023643 | 0,023665 |
| 6901 | 1449 | 1 | 0,030691 | 0,0307184 | 0,030767 | 0,030664 | 0,030755 | 0,030708 | 0,030698 |
| 6925 | 1444 | 1 | 0,033186 | 0,0331576 | 0,033188 | 0,033115 | 0,033189 | 0,033208 | 0,033088 |
| 6964 | 1436 | 1 | 0,035052 | 0,0350774 | 0,0351 | 0,034983 | 0,035168 | 0,035051 | 0,035085 |
| 6998 | 1429 | 1 | 0,034516 | 0,0345532 | 0,034541 | 0,034482 | 0,034606 | 0,0345 | 0,034637 |
| 7052 | 1418 | 1 | 0,039698 | 0,0396944 | 0,039673 | 0,039522 | 0,039765 | 0,039724 | 0,039788 |
| 7062 | 1416 | 1 | 0,041541 | 0,0415304 | 0,041504 | 0,041347 | 0,041604 | 0,041588 | 0,041609 |
| 7092 | 1410 | 1 | 0,045553 | 0,0455686 | 0,045523 | 0,045335 | 0,045654 | 0,045617 | 0,045714 |
| 7148 | 1399 | 1 | 0,052377 | 0,052487 | 0,052493 | 0,052322 | 0,052627 | 0,052425 | 0,052568 |
| 7158 | 1397 | 1 | 0,053934 | 0,0539828 | 0,054005 | 0,053795 | 0,054148 | 0,053874 | 0,054092 |

TABLE 5   (continued)

| On line Control of the Properties of a Polyisobutene of Low Mol. Wt. | | | | | | | | | |
|---|---|---|---|---|---|---|---|---|---|
| | | Wt | 5A | | 5B | 5C | 5D | 5E | 5F |
| | | | Measured | Estimated | | | | | |
| | Prox. Index | | | 4,34E-07 | 2,28E-07 | 8,65E-07 | 9,18E-07 | 1,07E-06 | 1,68E-06 |
| Wavelength | | | | | | | | | |
| λ(cm-1) | λ(nm) | | | | | | | | |
| 7199 | 1389 | 1 | 0,056665 | 0,0569614 | 0,05701 | 0,056767 | 0,057037 | 0,056838 | 0,057155 |
| 7220 | 1385 | 1 | 0,056997 | 0,056996 | 0,057043 | 0,056965 | 0,057052 | 0,056858 | 0,057062 |
| 7231 | 1383 | 1 | 0,056741 | 0,0566584 | 0,056674 | 0,056626 | 0,056695 | 0,056527 | 0,05677 |
| 7262 | 1377 | 1 | 0,053595 | 0,0535546 | 0,053611 | 0,053499 | 0,053576 | 0,053515 | 0,053572 |
| 7294 | 1371 | 1 | 0,047392 | 0,0473396 | 0,047407 | 0,047357 | 0,047322 | 0,047342 | 0,04727 |
| 7331 | 1364 | 1 | 0,039219 | 0,039141 | 0,039245 | 0,039188 | 0,039132 | 0,039158 | 0,038954 |
| 7348 | 1361 | 1 | 0,035389 | 0,0352522 | 0,035363 | 0,03534 | 0,035213 | 0,035285 | 0,03506 |
| 7375 | 1356 | 1 | 0,026707 | 0,026597 | 0,02671 | 0,026679 | 0,02654 | 0,025663 | 0,026426 |
| 7402 | 1351 | 1 | 0,017328 | 0,017232 | 0,017357 | 0,017328 | 0,017195 | 0,017258 | 0,017022 |
| 7899 | 1266 | 1 | 0,002464 | 0,0024384 | 0,00244 | 0,002455 | 0,002472 | 0,002381 | 0,002444 |
| 8000 | 1250 | 1 | 0,007208 | 0,007183 | 0,00719 | 0,00714 | 0,007244 | 0,007126 | 0,007215 |
| 8097 | 1235 | 1 | 0,017338 | 0,0172718 | 0,017276 | 0,01724 | 0,017281 | 0,017216 | 0,017346 |
| 8197 | 1220 | 1 | 0,035357 | 0,0352078 | 0,035245 | 0,035151 | 0,035316 | 0,034991 | 0,035336 |
| 8217 | 1217 | 1 | 0,039433 | 0,0393774 | 0,039449 | 0,039195 | 0,03959 | 0,039126 | 0,039527 |
| 8251 | 1212 | 1 | 0,047005 | 0,0468886 | 0,046848 | 0,046753 | 0,047075 | 0,046638 | 0,047129 |
| 8278 | 1208 | 1 | 0,05312 | 0,0530672 | 0,053062 | 0,052878 | 0,053291 | 0,052931 | 0,053174 |
| 8333 | 1200 | 1 | 0,081058 | 0,0809726 | 0,081013 | 0,080977 | 0,080954 | 0,081039 | 0,08088 |
| 8381 | 1196 | 1 | 0,093478 | 0,093531 | 0,093501 | 0,093565 | 0,093469 | 0,093861 | 0,093489 |
| 8375 | 1194 | 1 | 0,094014 | 0,0941538 | 0,094091 | 0,094159 | 0,09414 | 0,094226 | 0,094153 |
| 8382 | 1193 | 1 | 0,093212 | 0,09345 | 0,093337 | 0,093337 | 0,093457 | 0,093559 | 0,09356 |
| 8403 | 1190 | 1 | 0,08976 | 0,0899258 | 0,089806 | 0,089808 | 0,089953 | 0,089966 | 0,090096 |

TABLE 5   (continued)

| | | Wt | 5A | | 5B | 5C | 5D | 5E | 5F |
|---|---|---|---|---|---|---|---|---|---|
| **On line Control of the Properties of a Polyisobutene of Low Mol. Wt.** | | | | | | | | | |
| | | | Measured | Estimated | | | | | |
| | Prox. Index | | | 4,34E-07 | 2,28E-07 | 8,65E-07 | 9,18E-07 | 1,07E-06 | 1,68E-06 |
| Wavelength | | | | | | | | | |
| $\lambda$(cm-1) | $\lambda$(nm) | | | | | | | | |
| 8418 | 1188 | 1 | 0,08678 | 0,0869858 | 0,086901 | 0,086907 | 0,086959 | 0,087037 | 0,087125 |
| 8503 | 1176 | 1 | 0,06419 | 0,0641896 | 0,054217 | 0,064345 | 0,064015 | 0,064341 | 0,06403 |
| 8540 | 1171 | 1 | 0,054912 | 0,0548696 | 0,054942 | 0,055027 | 0,054736 | 0,055017 | 0,054626 |
| 8598 | 1163 | 1 | 0,040824 | 0,0408046 | 0,04087 | 0,040884 | 0,040724 | 0,040918 | 0,040627 |
| 8658 | 1155 | 1 | 0,03355 | 0,0335614 | 0,033553 | 0,033718 | 0,033461 | 0,033613 | 0,033462 |
| 8703 | 1149 | 1 | 0,029161 | 0,0291404 | 0,029156 | 0,029278 | 0,029022 | 0,029172 | 0,029074 |
| 8726 | 1146 | 1 | 0,025375 | 0,025314 | 0,025338 | 0,02541 | 0,025223 | 0,025394 | 0,025205 |
| 8803 | 1136 | 1 | 0,011761 | 0,0116668 | 0,011764 | 0,011772 | 0,011618 | 0,011658 | 0,011522 |
| | Viscosity | | 225 | 224,6 | 221 | 237 | 213 | 209 | 243 |
| | MN | | 946 | 923 | 926 | 930 | 914 | 902 | 943 |
| | LGPC | | 1,59 | 1,594 | 1,58 | 1,63 | 1,55 | 1,62 | 1,59 |
| | VIN | | 0,02 | 0,0215 | 0,017 | 0,026 | 0,018 | 0,021 | 0,027 |
| | TRI1 | | 0,012 | 0,0112 | 0,01 | 0,009 | 0,01 | 0,017 | 0,01 |
| | TRI2 | | 0,41 | 0,407 | 0,411 | 0,405 | 0,425 | 0,414 | 0,38 |
| | TRI2c | | 0,112 | 0,1156 | 0,115 | 0,111 | 0,121 | 0,121 | 0,11 |
| | TRI2t | | 0,298 | 0,2914 | 0,296 | 0,294 | 0,304 | 0,293 | 0,27 |
| | TRItot | | 0,578 | 0,5766 | 0,586 | 0,557 | 0,594 | 0,598 | 0,548 |
| | TETRA | | 0,163 | 0,1686 | 0,159 | 0,177 | 0,17 | 0,17 | 0,167 |
| | BUT-1 | | 7,0 | 7,3 | 7,2 | 7,2 | 7,5 | 7,13 | 7,47 |
| | Flash Point | | 171 | 170 | 170 | 172 | 168 | 165 | 175 |
| | PIBSA | | 99 | 99,2 | 99,5 | 98,6 | 98,4 | 99,3 | 100,1 |

TABLE 6

| | | Wt | 6A | | 6B | 6C | 6D | 6E | 6F |
|---|---|---|---|---|---|---|---|---|---|
| | | | Measured | Estimated | | | | | |
| | Prox. Index | | | 0,0042626 | 0,0072895 | 0,0095186 | 0,012812 | 0,017956 | 0,020326 |
| Wavelength | | | | | | | | | |
| λ (cm-1) | λ (nm) | | | | | | | | |
| 5520 | 1812 | 1 | 2,9479 | 2,96034 | 2,9491 | 2,9576 | 2,9467 | 2,99 | 2,9583 |
| 5532 | 1808 | 1 | 2,9677 | 2,98038 | 2,9708 | 2,978 | 2,9663 | 3,0081 | 2,9787 |
| 5544 | 1804 | 1 | 2,9663 | 2,97482 | 2,9668 | 2,9721 | 2,96 | 3,0018 | 2,9734 |
| 5556 | 1800 | 1 | 2,9003 | 2,90612 | 2,898 | 2,9034 | 2,891 | 2,9307 | 2,9075 |
| 5568 | 1796 | 1 | 2,7954 | 2,8019 | 2,7949 | 2,7982 | 2,7872 | 2,8221 | 2,8071 |
| 5580 | 1792 | 1 | 2,7574 | 2,76272 | 2,7576 | 2,7579 | 2,7484 | 2,7806 | 2,7691 |
| 5592 | 1788 | 1 | 2,8275 | 2,83096 | 2,827 | 2,8257 | 2,8166 | 2,848 | 2,8375 |
| 5604 | 1784 | 1 | 2,9641 | 2,96714 | 2,9628 | 2,9637 | 2,9534 | 2,9834 | 2,9724 |
| 5616 | 1781 | 1 | 3,1253 | 3,12946 | 3,1245 | 3,1266 | 3,1188 | 3,1432 | 3,1342 |
| 5628 | 1777 | 1 | 3,4014 | 3,40732 | 3,4035 | 3,4037 | 3,3982 | 3,4176 | 3,4136 |
| 5640 | 1773 | 1 | 3,9219 | 3,9267 | 3,9225 | 3,9257 | 3,9216 | 3,9356 | 3,9281 |
| 5700 | 1754 | 1 | 3,271 | 3,2721 | 3,2677 | 3,2734 | 3,2756 | 3,2707 | 3,2731 |
| 5712 | 1751 | 1 | 3,5188 | 3,5218 | 3,5101 | 3,5287 | 3,5403 | 3,519 | 3,5109 |
| 5724 | 1747 | 1 | 3,967 | 3,9723 | 3,958 | 3,9822 | 3,9966 | 3,9724 | 3,9521 |
| 5736 | 1743 | 1 | 4,5291 | 4,5327 | 4,5232 | 4,5424 | 4,5574 | 4,5313 | 4,5092 |
| 5748 | 1740 | 1 | 5,4361 | 5,431 | 5,4283 | 5,4432 | 5,4697 | 5,4195 | 5,3943 |
| 5760 | 1736 | 1 | 6,2954 | 6,28316 | 6,2855 | 6,2961 | 6,3339 | 6,274 | 6,2263 |
| 5772 | 1733 | 1 | 6,1311 | 6,11846 | 6,1275 | 6,1305 | 6,1556 | 6,1092 | 6,0695 |
| 5784 | 1729 | 1 | 5,3665 | 5,36016 | 5,3687 | 5,3736 | 5,3895 | 5,3388 | 5,3302 |
| 5796 | 1725 | 1 | 4.7353 | 4,73128 | 4,7371 | 4,7434 | 4,7547 | 4,7058 | 4,7154 |

TABLE 6  (continued)

| | | Wt | 6A | | 6B | 6C | 6D | 6E | 6F |
|---|---|---|---|---|---|---|---|---|---|
| | | | Measured | Estimated | | | | | |
| **Manufacture of a Polyethylene** | | | | | | | | | |
| | Prox. Index | | | 0,0042626 | 0,0072895 | 0,0095186 | 0,012812 | 0,017956 | 0,020326 |
| Wavelength | | | | | | | | | |
| $\lambda$ (cm-1) | $\lambda$ (nm) | | | | | | | | |
| 5808 | 1722 | 1 | 4,2184 | 4,21624 | 4,2189 | 4,22 | 4,2259 | 4,1997 | 4,2167 |
| 5820 | 1718 | 1 | 3,7382 | 3,7354 | 3,7383 | 3,7317 | 3,7329 | 3,7265 | 3,7476 |
| 5832 | 1715 | 1 | 3,2482 | 3,24516 | 3,252 | 3,2379 | 3,2325 | 3,2378 | 3,2656 |
| 5844 | 1711 | 1 | 2,7005 | 2,69712 | 2,7088 | 2,6865 | 2,6767 | 2,6865 | 2,7271 |
| 5856 | 1708 | 1 | 2,1677 | 2,16416 | 2,1782 | 2,1539 | 2,1453 | 2,1454 | 2,197 |
| 5868 | 1704 | 1 | 1,7811 | 1,777 | 1,7899 | 1,7685 | 1,7611 | 1,7578 | 1,8077 |
| 5880 | 1701 | 1 | 1,543 | 1,53756 | 1,549 | 1,5317 | 1,5247 | 1,5187 | 1,5637 |
| 5892 | 1697 | 1 | 1,386 | 1,37964 | 1,3902 | 1,3751 | 1,3678 | 1,362 | 1,4031 |
| 5904 | 1694 | 1 | 1,2531 | 1,24688 | 1,256 | 1,2422 | 1,2334 | 1,2363 | 1,2665 |
| 5916 | 1690 | 1 | 1,1365 | 1,1301 | 1,135 | 1,1265 | 1,1181 | 1,1269 | 1,144 |
| 8040 | 1244 | 1 | 2,017 | 2,00228 | 2,007 | 1,9968 | 1,9988 | 2,0068 | 2,002 |
| 8052 | 1242 | 1 | 2,1798 | 2,16904 | 2,1741 | 2,1633 | 2,1689 | 2,1757 | 2,1632 |
| 8064 | 1240 | 1 | 2,3554 | 2,3495 | 2,3502 | 2,3435 | 2,3506 | 2,3583 | 2,3449 |
| 8076 | 1238 | 1 | 2,5542 | 2,54602 | 2,5463 | 2,5412 | 2,5411 | 2,5583 | 2,5432 |
| 8088 | 1236 | 1 | 2,77 | 2,7631 | 2,764 | 2,7595 | 2,7549 | 2,778 | 2,7591 |
| 8100 | 1235 | 1 | 3,0086 | 3,00852 | 3,006 | 3,01 | 3,0001 | 3,0222 | 3,0043 |
| 8112 | 1233 | 1 | 3,2815 | 3,28462 | 3,281 | 3,2858 | 3,2755 | 3,2932 | 3,2876 |
| 8124 | 1231 | 1 | 3,5883 | 3,58138 | 3,5901 | 3,5889 | 3,5827 | 3,5958 | 3,5994 |
| 8136 | 1229 | 1 | 3,9312 | 3,932 | 3,9335 | 3,9321 | 3,9259 | 3,9335 | 3,935 |
| 8148 | 1227 | 1 | 4,3057 | 4,30886 | 4,3138 | 4,3117 | 4,3029 | 4,3088 | 4,3071 |

TABLE 6   (continued)

| | | Wt | 6A | | 6B | 6C | 6D | 6E | 6F |
|---|---|---|---|---|---|---|---|---|---|
| | | | Measured | Estimated | | | | | |
| | Prox. Index | | | 0,0042626 | 0,0072895 | 0,0095186 | 0,012812 | 0,017956 | 0,020326 |
| Wavelength | | | | | | | | | |
| λ (cm-1) | λ (nm) | | | | | | | | |
| 8160 | 1225 | 1 | 4,6904 | 4,70348 | 4,7063 | 4,7085 | 4,6972 | 4,7021 | 4,7013 |
| 8172 | 1224 | 1 | 5,0567 | 5,0748 | 5,0806 | 5,085 | 5,0706 | 5,0702 | 5,0676 |
| 8184 | 1222 | 1 | 5,3584 | 5,37704 | 5,3885 | 5,3897 | 5,3754 | 5,3703 | 5,3613 |
| 8196 | 1220 | 1 | 5,5454 | 5,56502 | 5,5760 | 5,5765 | 5,5653 | 5,5602 | 5,5465 |
| 8208 | 1218 | 1 | 5,5949 | 5,61744 | 5,6243 | 5,6316 | 5,6174 | 5,6161 | 5,5978 |
| 8304 | 1204 | 1 | 3,9622 | 3,97292 | 3,9776 | 3,9785 | 3,9664 | 3,9677 | 3,9744 |
| 8316 | 1203 | 1 | 3,7097 | 3,71178 | 3,7158 | 3,7128 | 3,7071 | 3,7087 | 3,7145 |
| 8328 | 1201 | 1 | 3,452 | 3,44774 | 3,4551 | 3,4456 | 3,4421 | 3,445 | 3,4509 |
| 8340 | 1199 | 1 | 3,1855 | 3,18512 | 3,1931 | 3,1644 | 3,1794 | 3,1793 | 3,1894 |
| 8352 | 1197 | 1 | 2,9428 | 2,94286 | 2,9445 | 2,9422 | 2,9419 | 2,9321 | 2,9536 |
| 8364 | 1196 | 1 | 2,7439 | 2,74022 | 2,7361 | 2,7369 | 2,7463 | 2,727 | 2,7548 |
| 8376 | 1194 | 1 | 2,6033 | 2,0352 | 2,5999 | 2,603 | 2,6104 | 2,5913 | 2,613 |
| 8388 | 1192 | 1 | 2,5465 | 2,55012 | 2,5457 | 2,553 | 2,5529 | 2,5426 | 2,5564 |
| 8400 | 1190 | 1 | 2,54 | 2,53978 | 2,5322 | 2,5348 | 2,5421 | 2,5409 | 2,5489 |
| 8412 | 1189 | 1 | 2,4926 | 2,48966 | 2,4825 | 2,4746 | 2,4951 | 2,497 | 2,4991 |
| 8424 | 1187 | 1 | 2,3635 | 2,35776 | 2,3517 | 2,343 | 2,3666 | 2,369 | 2,3636 |
| 8436 | 1185 | 1 | 2,1984 | 2,1897 | 2,1797 | 2,1783 | 2,2041 | 2,1911 | 2,1953 |
| 8448 | 1184 | 1 | 2,047 | 2,03606 | 2,0245 | 2,0367 | 2,0514 | 2,0337 | 2,044 |
| 8460 | 1182 | 1 | 1,9027 | 1,89284 | 1,8818 | 1,8996 | 1,9027 | 1,8872 | 1,8929 |
| 8472 | 1180 | 1 | 1,7662 | 1,75796 | 1,7562 | 1,7615 | 1,7655 | 1,7557 | 1,7509 |

**Manufacture of a Polyethylene**

TABLE 6 (continued)

| | | Wt | 6A | | 6B | 6C | 6D | 6E | 6F |
|---|---|---|---|---|---|---|---|---|---|
| **Manufacture of a Polyethylene** | | | | | | | | | |
| | | | Measured | Estimated | | | | | |
| | Prox. Index | | | 0,0042626 | 0,0072895 | 0,0095186 | 0,012812 | 0,017956 | 0,020326 |
| Wavelength | | | | | | | | | |
| $\lambda$ (cm-1) | $\lambda$ (nm) | | | | | | | | |
| 8484 | 1179 | 1 | 1,6745 | 1,66826 | 1,6685 | 1,6682 | 1,6732 | 1,6694 | 1,662 |
| 8496 | 1177 | 1 | 1,6317 | 1,61862 | 1,6109 | 1,6228 | 1,6257 | 1,618 | 1,6157 |
| grade | | | 4.4 | 4,3 | 4,2 | 4,4 | 4,1 | 4,3 | 4,6 |
| density | | | 0,953 | 0,952 | 0,952 | 0,953 | 0,952 | 0,952 | 0,951 |

## Example 6

Control of Manufacture of a Polyethylene

Ethylene was polymerised with a chromium catalyst in a plant to produce polyethylene, whose properties of density and fluidity index/Melt Index (measured according to the IF2 standard method) (called grade) were to control its market specification. The product 6A, in the form of a powder, required rapid measurement of these properties to correct the plant operating conditions to ensure manufacture of a polymer of constant quality.

The NIR spectra of a series of standard polyethylenes were determined by means of a Fourier Transform NIR spectrometer in the 5500-8400cm$^{-1}$ region, as well as their densities and fluidity indices to obtain a bank of standards. The absorbances of the spectra were normalised as described above, to ensure better known numerical stability for the data. The Minimal Proximity Index was calculated from the unweighted proximity indices of the standards (according to Eq.2) and by means of the technique of Eq.8 in which v was 1.1, the proximity index to the product 6A was chosen at 0.025.

The proximity indices between the unknown polyethylene 6A from the plant and the standards were calculated according to Eq.2, and three standards 6B, 6C and 6D were found with small enough proximity indices. The polymerisation process was controlled to keep these 3 standards as those with the smallest proximity indices and hence to keep the properties of the product substantially constant. To check, the properties of standards 6B-D were averaged to give the properties of the unknown product 6A in less than 1 minute, demonstrating immediate reaction to all variations in the production operation. The results are shown in Table 6, and are in perfect agreement with the properties determined by reference methods, and within their reproducibilities, namely 1‰ for density and 14% for grade.

The method may be applied in the same way to the determination of other properties, for example percentage of comonomer in an ethylene copolymerisation, the degree of conversion of the reaction or the content of volatiles, as well as to other types of polymerisations to polyethylene such as ones with Ziegler Natta catalysts.

## Example 7

Controlling Production of a Polyethylene Glycol

A polyalkoxylenated product had been made discontinuously by polymerisation in the liquid phase of one or more epoxides specifically ethylene oxide with an organic compound possessing at least one active hydrogen atom, such as an alcohol specifically butanol. The values of the properties of the product during the process had hitherto been regularly evaluated in the laboratory by standard methods during the production in order to determine the necessary amounts of epoxide. However, the times to obtain the analytical results were generally prohibitive in terms of the amounts of epoxide consumed and quality of product obtained during non optimum operations.

The method of the present invention was applied to this process. A band of standards for polyethylenoxylated butanols covering the field between low ones (Mol. Wt about 200) up to high ones (Mol. Wt of the order of 9000) was generated incorporating the properties of a number of these compounds as well as their spectra, determined in the 4000-8400cm$^{-1}$ wavelength region with an FT NIR spectrometer. The properties considered were the hydroxyl index (fundamental for the conduct/progress of the reaction) as well as the viscosity measured at 100°C and the molecular weight.

The bank of data was applied by the method of the invention to the production of a polyethylenoxylated butanol of Molecular Weight of about 8000 (PEG 8000). From the standards with spectra normalised per Eq.3 the Minimal Index was calculated at 1.2x10$^{-4}$. The Proximity Indices between the unknown PEG 8000 and the standards were calculated (using Eq. 2) and four standards 7A, 7B, 7C and 7D and 7E were found with Proximity Index values less than the Minimal Index. The process was controlled to keep these 4 standards those with proximity indices less than the Minimal Index and hece maintain the properties of the product. To check this, the properties of the unknown PEG 8000 were calculated by averaging the properties of the standards with (as shown in Table 7) excellent results for all which were obtained in less than I minute, showing the maintenance or immediate correction of the level of ethylene oxide used in order to maintain the final quality of the products. Furthermore the differences obtained between the results obtained by the above calculations and by standard methods were all inside the limits of reproducibility of those reference methods, namely 0.7% for the viscosity (by ASTM D445) and 5.8% and 3.6% respectively for the hydroxyl index below and above 100 (ASTM D4274). The Molecular Weight was obtained directly from the hydroxyl index with the same reproducibility values.

TABLE 7

| | | Wt | 7A | | 7B | 7C | 7D | 7E |
|---|---|---|---|---|---|---|---|---|
| | | | Measured | Estimated | | | | |
| | Prox. Index | | | 0,00006519 | 0,00000977 | 0,00007494 | 0,00010457 | 0,00011574 |
| Wavelength | | | | | | | | |
| λ (cm⁻¹) | λ (nm) | | | | | | | |
| 4164 | 2402 | 1 | 0,12662 | 0,121605 | 0,12559 | 0,1212 | 0,12117 | 0,11846 |
| 4308 | 2321 | 1 | 0,24254 | 0,2387275 | 0,24285 | 0,23781 | 0,23696 | 0,23729 |
| 4524 | 2210 | 1 | 0,054854 | 0,0567045 | 0,054802 | 0,056171 | 0,057599 | 0,058246 |
| 4836 | 2068 | 1 | 0,048031 | 0,0485855 | 0,048451 | 0,048238 | 0,048588 | 0,049065 |
| 5172 | 1933 | 1 | 0,059102 | 0,06188575 | 0,061585 | 0,061986 | 0,064102 | 0,05987 |
| 5436 | 1840 | 1 | 0,056088 | 0,0555625 | 0,056049 | 0,0555 | 0,055054 | 0,055647 |
| 5544 | 1804 | 1 | 0,068293 | 0,06745175 | 0,067773 | 0,066995 | 0,067073 | 0,067966 |
| 5748 | 1740 | 1 | 0,10824 | 0,107665 | 0,10872 | 0,10703 | 0,10673 | 0,10818 |
| 5856 | 1708 | 1 | 0,037196 | 0,0374255 | 0,037003 | 0,037603 | 0,037295 | 0,037801 |
| 6624 | 1510 | 1 | 0,014687 | 0,015498 | 0,014728 | 0,016063 | 0,01551 | 0,015691 |
| 6684 | 1496 | 1 | 0,019234 | 0,01960475 | 0,019068 | 0,019792 | 0,019826 | 0,019733 |
| 6720 | 1488 | 1 | 0,020139 | 0,02084475 | 0,020349 | 0,021013 | 0,020942 | 0,021075 |
| 6792 | 1472 | 1 | 0,022751 | 0,023453 | 0,022848 | 0,023636 | 0,023758 | 0,02357 |
| 6972 | 1434 | 1 | 0,030389 | 0,03078325 | 0,030175 | 0,030929 | 0,03119 | 0,030839 |
| 7092 | 1410 | 1 | 0,021148 | 0,02166525 | 0,021221 | 0,022095 | 0,021621 | 0,021724 |
| 7116 | 1405 | 1 | 0,021822 | 0,02246175 | 0,02158 | 0,022824 | 0,02273 | 0,022713 |
| 7920 | 1263 | 1 | 0,004193 | 0,00522035 | 0,0042156 | 0,0057718 | 0,0054551 | 0,0054389 |
| 8172 | 1224 | 1 | 0,03318 | 0,0330015 | 0,032074 | 0,032927 | 0,032945 | 0,03406 |
| 8352 | 1197 | 1 | 0,011492 | 0,0118575 | 0,010926 | 0,012427 | 0,011449 | 0,012628 |
| Hydroxyl Index | | | 13,1 | 13,1 | 13,1 | 13 | 13,2 | 13,15 |
| Viscosity | | | 701 | 704 | 703 | 710 | 708 | 695 |
| Molec. Weight | | | 8560 | 8612,5 | 8400 | 8370 | 8450 | 9230 |

**Control of a Production Unit for PEG**

Example 8

Control of Production of a Process Oil

The NIR spectrum between 4800 and 4000cm⁻¹ with normalisation of the absorbances, [the base line being taken at 4780cm⁻¹] was measured on a process Oil Reference 8D of "Enerthene" type which was made by a process of mixing a neutral base oil and aromatic-containing vacuum distillate extract. From a bank of standard process oils of this type, Minimal Index was found by the Minimal Index Procedure to be $5 \times 10^{-7}$, providing a sphere of identity. 3 standard oils 8A, 8B and 8C were found with proximity indices with respect to 8D less than the Minimal Index and hence inside that sphere. The properties of oils 8A, 8B, 8C and their spectra and the spectrum of 8D are given in Table 8. The mixing process was performed to keep those standards the ones with lowest proximity indices with respect to the product oil, and hence maintain its properties. This was checked by arithmetic mean averaging of the properties of 8A, 8B and 8C, to estimate the properties of 8D, and these together with the measured properties of 8D are given also in Table 8.

The single analysis gave all the properties without regression calculation and with an accuracy in line with the reproducibility of the reference methods.

In Table 8, the expression 4.20 E-04 means $4.2 \times 10^{-4}$ and PCA means Polycyclic Aromatic hydrocarbon.

## TABLE 8 – Process oil production

| λ (cm-1) λ (nm) | Loading | Oil D Measured | Oil D Estimated $1.09 \times 10^{-7}$ | Oil 8A $3.5 \times 10^{-7}$ | Oil 8B $1.19 \times 10^{-7}$ | Oil 8C $2.19 \times 10^{-7}$ |
|---|---|---|---|---|---|---|
| | | | Proximity Index | | | |
| 4700 2127 | 1 | 4,2000000E-04 | 3,5000000E-04 | 3,2000000E-04 | 3,5000000E-04 | 3,8000000E-04 |
| 4688 2133 | 1 | 7,3000000E-04 | 6,4666667E-04 | 6,1000000E-04 | 6,7000000E-04 | 6,6000000E-04 |
| 4680 2136 | 1 | 9,8000000E-04 | 9,6333333E-04 | 9,6000000E-04 | 9,4000000E-04 | 9,9000000E-04 |
| 4664 2144 | 1 | 1,8300000E-03 | 1,7833333E-03 | 1,7600000E-03 | 1,7600000E-03 | 1,8300000E-03 |
| 4656 2147 | 1 | 2,1600000E-03 | 2,0900000E-03 | 2,0900000E-03 | 2,0600000E-03 | 2,1200000E-03 |
| 4648 2151 | 1 | 2,5100000E-03 | 2,4300000E-03 | 2,4100000E-03 | 2,4100000E-03 | 2,4700000E-03 |
| 4632 2158 | 1 | 2,9500000E-03 | 2,9233333E-03 | 2,8600000E-03 | 2,9100000E-03 | 3,0000000E-03 |
| 4624 2162 | 1 | 3,1100000E-03 | 3,0966667E-03 | 3,0100000E-03 | 3,0600000E-03 | 3,2000000E-03 |
| 4616 2166 | 1 | 3,1700000E-03 | 3,1833333E-03 | 3,1200000E-03 | 3,1600000E-03 | 3,2500000E-03 |
| 4600 2173 | 1 | 3,1000000E-03 | 3,1466667E-03 | 3,1100000E-03 | 3,1600000E-03 | 3,1700000E-03 |
| 4592 2177 | 1 | 3,0700000E-03 | 3,0500000E-03 | 3,0000000E-03 | 3,0500000E-03 | 3,1000000E-03 |
| 4576 2185 | 1 | 2,6300000E-03 | 2,6800000E-03 | 2,6500000E-03 | 2,6800000E-03 | 2,6100000E-03 |
| 4568 2189 | 1 | 2,3200000E-03 | 2,3133333E-03 | 2,2500000E-03 | 2,3100000E-03 | 2,3800000E-03 |
| 4560 2192 | 1 | 2,2300000E-03 | 2,1933333E-03 | 2,1500000E-03 | 2,1600000E-03 | 2,2700000E-03 |
| 4540 2202 | 1 | 2,0200000E-03 | 1,9966667E-03 | 2,0000000E-03 | 1,9800000E-03 | 2,0100000E-03 |
| 4504 2220 | 1 | 2,3400000E-03 | 2,3133333E-03 | 2,2900000E-03 | 2,2900000E-03 | 2,3600000E-03 |
| 4472 2238 | 1 | 3,2300000E-03 | 3,2000000E-03 | 3,1600000E-03 | 3,1900000E-03 | 3,2600000E-03 |
| 4440 2252 | 1 | 6,1400000E-03 | 6,0966667E-03 | 6,0800000E-03 | 6,0600000E-03 | 6,1500000E-03 |
| 4432 2256 | 1 | 7,8000000E-03 | 7,8100000E-03 | 7,7800000E-03 | 7,7700000E-03 | 7,8800000E-03 |
| 4424 2260 | 1 | 1,0270000E-02 | 1,0210000E-02 | 1,0180000E-02 | 1,0190000E-02 | 1,0280000E-02 |
| 4416 2264 | 1 | 1,3160000E-02 | 1,3130000E-02 | 1,3100000E-02 | 1,3080000E-02 | 1,3200000E-02 |
| 4408 2268 | 1 | 1,6510000E-02 | 1,6490000E-02 | 1,6430000E-02 | 1,6470000E-02 | 1,6570000E-02 |
| 4400 2272 | 1 | 1,9410000E-02 | 1,9386667E-02 | 1,9340000E-02 | 1,9350000E-02 | 1,9470000E-02 |
| 4392 2276 | 1 | 2,0970000E-02 | 2,0963333E-02 | 2,0930000E-02 | 2,0940000E-02 | 2,1020000E-02 |
| 4382 2282 | 1 | 2,1900000E-02 | 2,1913333E-02 | 2,1870000E-02 | 2,1930000E-02 | 2,1940000E-02 |
| 4376 2285 | 1 | 2,2570000E-02 | 2,2530000E-02 | 2,2510000E-02 | 2,2620000E-02 | 2,2560000E-02 |
| 4368 2289 | 1 | 2,3080000E-02 | 2,3063333E-02 | 2,3030000E-02 | 2,3030000E-02 | 2,3100000E-02 |
| 4352 2297 | 1 | 2,8240000E-02 | 2,8183333E-02 | 2,8170000E-02 | 2,8160000E-02 | 2,8220000E-02 |
| 4344 2302 | 1 | 3,3140000E-02 | 3,3196667E-02 | 3,3230000E-02 | 3,3220000E-02 | 3,3140000E-02 |
| 4330 2309 | 1 | 3,8690000E-02 | 3,8780000E-02 | 3,8850000E-02 | 3,8810000E-02 | 3,8880000E-02 |
| 4320 2314 | 1 | 3,4290000E-02 | 3,4320000E-02 | 3,4360000E-02 | 3,4300000E-02 | 3,4300000E-02 |
| 4312 2319 | 1 | 3,0890000E-02 | 3,0863333E-02 | 3,0630000E-02 | 3,0870000E-02 | 3,0950000E-02 |
| 4304 2323 | 1 | 2,8560000E-02 | 2,8576667E-02 | 2,8560000E-02 | 2,8580000E-02 | 2,8610000E-02 |
| 4296 2327 | 1 | 2,6340000E-02 | 2,6366667E-02 | 2,6340000E-02 | 2,6400000E-02 | 2,6420000E-02 |
| 4280 2331 | 1 | 2,5250000E-02 | 2,5223333E-02 | 2,5200000E-02 | 2,5230000E-02 | 2,5240000E-02 |
| 4280 2338 | 1 | 2,5780000E-02 | 2,5766667E-02 | 2,5800000E-02 | 2,5780000E-02 | 2,5780000E-02 |
| 4272 2340 | 1 | 2,8200000E-02 | 2,8283333E-02 | 2,8300000E-02 | 2,8290000E-02 | 2,8200000E-02 |
| 4256 2348 | 1 | 3,2280000E-02 | 3,2410000E-02 | 3,2500000E-02 | 3,2470000E-02 | 3,2280000E-02 |
| 4248 2354 | 1 | 2,9760000E-02 | 2,9810000E-02 | 2,9870000E-02 | 2,9820000E-02 | 2,9740000E-02 |
| 4240 2358 | 1 | 2,7120000E-02 | 2,7133333E-02 | 2,7120000E-02 | 2,7170000E-02 | 2,7110000E-02 |
| 4232 2362 | 1 | 2,5410000E-02 | 2,5393333E-02 | 2,5410000E-02 | 2,5410000E-02 | 2,5360000E-02 |
| 4224 2367 | 1 | 2,3930000E-02 | 2,4000000E-02 | 2,4000000E-02 | 2,4020000E-02 | 2,3980000E-02 |

## TABLE 8 (cont)
## Process oil production

| | Loading | Oil D Measured | Oil D Estimated | Oil 8A | Oil 8B | Oil 8C |
|---|---|---|---|---|---|---|
| Proximity Index | | | $1.09 \times 10^{-7}$ | $3.5 \times 10^{-7}$ | $1.19 \times 10^{-7}$ | $2.19 \times 10^{-7}$ |
| | | | | | | |
| $\lambda$ (cm-1) $\lambda$ (nm) | | | | | | |
| 4212 2374 | 1 | 2,2630000E-02 | 2,2630000E-02 | 2,2680000E-02 | 2,2650000E-02 | 2,2560000E-02 |
| 4200 2380 | 1 | 2,2060000E-02 | 2,2106667E-02 | 2,2140000E-02 | 2,2160000E-02 | 2,2020000E-02 |
| 4192 2385 | 1 | 2,2010000E-02 | 2,2043333E-02 | 2,2110000E-02 | 2,2070000E-02 | 2,1950000E-02 |
| 4184 2390 | 1 | 2,2220000E-02 | 2,2226667E-02 | 2,2310000E-02 | 2,2230000E-02 | 2,2140000E-02 |
| 4176 2394 | 1 | 2,2780000E-02 | 2,2816667E-02 | 2,2860000E-02 | 2,2840000E-02 | 2,2750000E-02 |
| 4170 2398 | 1 | 2,3160000E-02 | 2,3213333E-02 | 2,3290000E-02 | 2,3210000E-02 | 2,3140000E-02 |
| 4160 2403 | 1 | 2,2840000E-02 | 2,2850000E-02 | 2,2890000E-02 | 2,2860000E-02 | 2,2800000E-02 |
| 4152 2408 | 1 | 2,1810000E-02 | 2,1843333E-02 | 2,1900000E-02 | 2,1860000E-02 | 2,1770000E-02 |
| 4136 2417 | 1 | 2,0630000E-02 | 2,0630000E-02 | 2,0700000E-02 | 2,0640000E-02 | 2,0550000E-02 |
| 4120 2427 | 1 | 2,0170000E-02 | 2,0186667E-02 | 2,0240000E-02 | 2,0220000E-02 | 2,0100000E-02 |
| 4104 2436 | 1 | 1,9520000E-02 | 1,9563333E-02 | 1,9590000E-02 | 1,9590000E-02 | 1,9510000E-02 |
| 4092 2443 | 1 | 1,9530000E-02 | 1,9593333E-02 | 1,9640000E-02 | 1,9610000E-02 | 1,9530000E-02 |
| 4080 2450 | 1 | 2,1540000E-02 | 2,1513333E-02 | 2,1550000E-02 | 2,1530000E-02 | 2,1460000E-02 |
| 4072 2455 | 1 | 2,3530000E-02 | 2,3530000E-02 | 2,3550000E-02 | 2,3530000E-02 | 2,3510000E-02 |
| 4068 2458 | 1 | 2,3430000E-02 | 2,3443333E-02 | 2,3460000E-02 | 2,3450000E-02 | 2,3420000E-02 |
| 4048 2470 | 1 | 1,8990000E-02 | 1,9010000E-02 | 2,9050000E-02 | 1,9020000E-02 | 1,8960000E-02 |
| 4000 2500 | 1 | 1,4630000E-02 | 1,4593333E-02 | 1,4620000E-02 | 1,4580000E-02 | 1,4590000E-02 |
| | | | | | | |
| Density kg/l | | 0,9348 | 0,9351 | 0,9350 | 0,9345 | 0,9360 |
| Sulphur % | | 2,25 | 2,28 | 2,37 | 1,98 | 2,51 |
| PCA % | | 2,60 | 2,57 | 2,88 | 2,74 | 2,1 |
| Viscosity at 100°C sCt | | 33,19 | 33,22 | 33,23 | 32,25 | 34,18 |
| Flash Point Cleveland °C | | 310 | 311 | 310 | 308 | 315 |

**Claims**

1. Method of controlling a process for which a material X is a feed or a product, in order to keep the value V of a property P of said product or the product of said process from said feed, or the yield of said process substantially constant to a desired value $V_c$, which method comprises measuring the absorption $D_{ix}$ of said material at more than one wavelength i in the region of 600 - 2600 nm, **characterized by**
comparing signals (i) indicative of said absorption or a mathematical function thereof with signals (ii) indicative of absorption $D_{im}$ at the same wavelengths or a mathematical function thereof for at least 2 standards $S_m$ for which said property or yield has known values V, choosing one or more of said standards $S_m$ having a value or values corresponding to $V_c$ for said property or yield, as standard(s) $S_{mc}$ determining the average value of the absolute differences or weighted absolute differences at said wavelengths i between the signal for said material and the signals for the standards $S_m$ and controlling said process to ensure that said standard(s) $S_{mc}$ continue(s) to be the standard(s) having the smaller or smallest average value of the absolute differences or weighted absolute differences at said wavelengths i between the signal for said material and the signals from the standards $S_m$.

2. A method according to claim 1 which comprises comparing said signals (i) from said material with said signals (ii) from said standards $S_{mc}$ at least n, n being two or more, of which have the n smallest average values of said absolute differences.

3. A method according to claim 1 or 2 comprising comparing absorptions $D_{ix}$, or a derivative thereof, with absorption $D_{im}$ or a derivative thereof.

4. A method according to any one of claims 1 to 3 wherein the standard(s) $S_{mc}$ is/are such that in relation to the material X and the or each standard $S_{mc}$ the following function is met

$$i_{xm}/\Sigma D_{ix} < \text{experimental error}$$

wherein $i_{xm}$ is the proximity index and is defined by $i^2(xm) = \Sigma(D_{ix}-D_{im})^2$ and the experimental error is in determining said property or yield in the standard, and in the case where more than one standard $S_{mc}$ meets the function, averaging the properties or yields from said standards gives a value $V_c$.

5. A modification of a method according to claim 4 wherein the comparison of signals (i) is with signals (ii) indicative of absorptions $D_{im}$ at the same wavelength or a mathematical function thereof of one standard $S_{mc}$ having the known value $V_c$ of said property or yield and controlling said process to ensure that the function specified in claim 4 is met.

6. A method according to claim 4 or 5 wherein the proximity index is less than a minimal index $i_m$ which has been determined from standards Sa, Sb, Sc ..... by (a) calculating for each pair of standards Sa/Sb, Sa/Sc the value of $i^2(a,b)$ etc, (b) relating the values of $i^2(a,b)$ etc to the corresponding differences EP (ab) of properties Pa, Pb of standards $S_a$, $S_b$ etc (c) calculating for each value of a parameter L for which $i^2(ab)$ is $\leq L$, the average of the corresponding differences EPab (d) calculating a Minimal index from the value of minimal index $i^2(ab)$ where said average of said differences EPab corresponds to the reproducibility at a property level at an appropriate confidence interval.

7. A method according to any one of the preceding claims wherein the process is controlled in a closed loop control system to control the processing equipment in relation to a process for which the material X is a product. - .

8. A method according to any one of the preceding claims wherein said process is a hydrocarbon conversion or separation process, preferably a reforming or catalytic cracking or hydrotreatment, or distillation or blending.

9. A method according to any one of claims 1-7 wherein said process is at least one of a polymerization, an oligomerization or an organic reaction in which at least one of the reactant and a product is a functionalized compound.

10. A method according to any one of claims 1-7 wherein said material X is a composition comprising part of a lubricating oil fraction obtainable from a vacuum distillation of oil.

**Patentansprüche**

1. Verfahren zum Steuern eines Prozesses, für den ein Material X ein Zuführungsmaterial oder ein Erzeugnis ist, um den Wert V einer Eigenschaft P des Erzeugnisses oder des Erzeugnisses des Prozesses aufgrund des Zuführungsmaterials, oder die Ausbeute des Prozesses im Wesentlichen konstant auf einem gewünschten Wert $V_c$ zu halten, welches Verfahren das Messen der Absorption $D_{ix}$ des Materials bei mehr als einer Wellenlänge i in dem Bereich von 600 - 2600 nm aufweist, **gekennzeichnet durch** Vergleichen von Signalen (i), die für diese Absorption anzeigend sind, oder einer mathematischen Funktion hiervon, mit Signalen (ii), die anzeigend für die Absorption $D_{im}$ bei denselben Wellenlängen ist, oder einer mathematischen Funktion hiervon, für zumindest zwei Standards $S_m$, für die die Eigenschaft oder Ausbeute bekannte Werte V hat, Wählen eines oder mehrerer der Standards $S_m$ mit einem Wert oder Werten entsprechend $V_c$ für die Eigenschaft oder Ausbeute als Standard(s) $S_{mc}$, Bestimmen des Durchschnittswertes der absoluten Differenzen oder gewichteten absoluten Differenzen bei den Wellenlängen i zwischen dem Signal für das Material und den Signalen für die Standards $S_m$, und Steuern des Prozesses, um sicherzustellen, dass der/die Standard(s) $S_{mc}$ sich fortsetzt/fortsetzen, der/die Standard(s) mit dem kleineren oder kleinsten Durchschnittswert der absoluten Differenzen oder gewichteten absoluten Differenzen bei den Wellenlängen i zwischen dem Signal für das Material und den Signalen von den Standards $S_m$ zu sein.

2. Verfahren nach Anspruch 1, das das Vergleichen der Signale (i) von dem Material mit den Signalen (ii) von den Standards $S_{mc}$, von denen zumindest n, wobei n gleich zwei oder mehr ist, die n kleinsten Durchschnittswerte der absoluten Differenzen haben, aufweist.

**3.** Verfahren nach Anspruch 1 oder 2,
aufweisend das Vergleichen der Absorptionen $D_{ix}$ oder einer Ableitung hiervon mit der Absorption $D_{im}$ oder einer Ableitung hiervon.

**4.** Verfahren nach einem der Ansprüche 1 bis 3, bei dem der/die Standard(s) $S_{mc}$ derart ist/sind,
dass in Beziehung zu dem Material X und dem oder jedem Standard $S_{mc}$ der folgenden Funktion genügt ist:

$$i_{xm}/\Sigma D_{ix} < \text{experimenteller Fehler}$$

worin $i_{xm}$ der Näheindex ist und durch $i^2(xm)-\Sigma(D_{ix}-D_{im})^2$ definiert ist, und der experimentelle Fehler ist die Eigenschaft oder Ausbeute in dem Standard bestimmend, und in dem Fall, in dem mehr als ein Standard $S_{mc}$ der Funktion genügt, Bilden des Durchschnitts der Eigenschaften oder Ausbeuten von diesen Standards gibt einen Wert $V_c$.

**5.** Modifikation eines Verfahrens nach Anspruch 4, worin der Vergleich von Signalen (i) mit Signalen (ii) ist, die anzeigend sind für Absorptionen $D_{im}$ bei derselben Wellenlänge oder eine mathematische Funktion hiervon von einem Standard $S_{mc}$ mit dem bekannten Wert $V_c$ der Eigenschaft oder Ausbeute, und Steuern des Prozesses, um sicherzustellen, dass der in Anspruch 4 spezifizierten Funktion genügt ist.

**6.** Verfahren nach Anspruch 4 oder 5, bei dem der Näheindex niedriger ist als ein minimaler Index $i_m$, der aus den Standards Sa, Sb, Sc ... bestimmt wurde durch (a) Berechnen für jedes Paar von Standards Sa/Sb, Sa/Sc den Wert von $i^2(a,b)$ usw., (b) in Beziehung Setzen der Werte von $i^2(a,b)$ usw, mit den entsprechenden Differenzen EP (ab) von Eigenschaften Pa, Pb von Standards Sa, Sb usw., (c) Berechnen für jeden Wert eines Parameters L, für den $i^2(ab) \leq L$ ist, den Durchschnitt der entsprechenden Differenzen EPab, (d) Berechnen eines minimalen Indexes aus dem Wert des minimalen Indexes $i^2(ab)$, wobei der Durchschnitt der Differenzen EPab der Reproduzierbarkeit eines Eigenschaftspegels bei einem geeigneten Zufallsfehlerbereich entspricht.

**7.** Verfahren nach einem der vorhergehenden Ansprüche, bei dem der Prozess in einem Regelsystem gesteuert wird, um die Prozessausrüstung in Beziehung zu einem Prozess, bei dem das Material X ein Erzeugnis ist, zu steuern.

**8.** Verfahren nach einem der vorhergehenden Ansprüche, bei dem der Prozess ein Kohlenwasserstoffumwandlungs- oder -trennprozess ist, vorzugsweise ein Reformieren oder katalytisches Kracken oder Hydrobehandeln, oder Destillieren oder Mischen.

**9.** Verfahren nach einem der Ansprüche 1 - 7, bei dem der Prozess zumindest einer von einer Polymerisation, einer Oligomerisierung oder einer organischen Reaktion, bei der zumindest einer des Reaktanden und eines Erzeugnisses eine funktionalisierte Verbindung ist, ist.

**10.** Verfahren nach einem der Ansprüche 1 - 7, bei dem das Material X eine Zusammensetzung ist, die einen Teil einer Schmierölfraktion aufweist, die aus einer Vakuumdestillation von Öl erhältlich ist.

## Revendications

**1.** Procédé servant à commander un traitement pour lequel un matériau X est un approvisionnement ou un produit, afin de maintenir sensiblement constante, à une valeur $V_c$ voulue, la valeur V d'une propriété P dudit produit ou du produit dudit traitement résultant dudit approvisionnement, ou du rendement dudit traitement, lequel procédé comprend la mesure de l'absorption $D_{ix}$ dudit matériau à plus d'une longueur d'onde i dans la région allant de 600 à 2 600 nm, **caractérisé en ce qu'**il comprend la comparaison de signaux (i) indicatifs de ladite absorption, ou d'une fonction mathématique de celle-ci, avec des signaux (ii) indicatifs de l'absorption $D_{im}$ aux mêmes longueurs d'ondes, ou d'une fonction mathématique de celle-ci, pour au moins deux normes $S_m$ pour lesquelles ladite propriété ou ledit rendement a des valeurs connues V, le choix d'une ou de plusieurs desdites normes $S_m$ ayant une valeur ou des valeurs correspondant à $V_c$ pour ladite propriété ou ledit rendement comme norme(s), la détermination de la valeur moyenne des différences absolues ou des différences absolues pondérées auxdites longueurs d'ondes i entre le signal relatif audit matériau et les signaux relatifs aux normes $S_m$, et la commande dudit traitement dans le but d'assurer que ladite ou lesdites normes $S_{mc}$ continuent d'être la ou les normes ayant la plus petite valeur moyenne des différences absolues ou des différences absolues pondérées auxdites longueurs d'onde i entre le signal relatif audit matériau et les signaux venant desdites normes $S_m$.

2. Procédé selon la revendication 1, qui comprend l'opération consistant à comparer lesdits signaux (i) venant dudit matériau avec lesdits signaux (ii) venant desdites normes $S_{mc}$, dont au moins n, n valant 2 ou plus, ont les n valeurs moyennes les plus petites desdites différences absolues.

3. Procédé selon la revendication 1 ou 2, comprenant l'opération qui consiste à comparer les absorptions $D_{ix}$, ou une dérivée de celles-ci, avec l'absorption $D_{im}$ ou une dérivée de celle-ci.

4. Procédé selon l'une quelconque des revendications 1 à 3, où la ou les normes $S_m$ sont telles que, en liaison avec le matériau X et la norme ou chaque norme $S_{mc}$, la fonction suivante est satisfaite :

$$i_{xm}/\Sigma D_{ix} < \text{erreur expérimentale}$$

où $i_{xm}$ est l'indice de proximité et est défini par $i^2(xm) = \Sigma(D_{ix}-D_{im})^2$ et l'erreur expérimentale se trouve dans la détermination de ladite propriété ou dudit rendement pour la norme, et, dans le cas où plus d'une norme $S_{mc}$ satisfit la fonction, la moyenne des propriétés ou des rendements venant desdites normes donne une valeur $V_c$.

5. Modification d'un procédé selon la revendication 4, où la comparaison des signaux (i) se fait avec des signaux (ii) indicatifs d'absorptions $D_{im}$ à la même longueur d'onde, ou d'une fonction mathématique de celles-ci, d'une norme $S_{mc}$ ayant la valeur connue $V_c$ de ladite propriété ou dudit rendement et commandant lesdits traitements afin d'assurer que la fonction spécifiée dans la revendication 4 est satisfaite.

6. Procédé selon la revendication 4 ou 5, où l'indice de proximité est inférieur à un indice minimal $i_m$ qui a été déterminé à partir des normes Sa, Sb, Sc... par (a) calcul, pour chaque paire de normes Sa/Sb, Sa/Sc, de la valeur de $I^2(a, b)$, etc., (b) mise en relation des valeurs de $i^2(a, b)$, etc. avec les différences correspondantes EP(ab) de propriétés Pa, Pb de normes $S_a$, $S_b$, etc., (c) calcul, pour chaque valeur d'un paramètre L pour lequel $i^2(ab)$ est $\leq$ L, de la moyenne des différences correspondantes EPab, (d) calcul d'un indice minimal à partir de la valeur de l'indice minimal $i^2(ab)$, où ladite moyenne desdites différences EPab correspond à la reproductibilité d'un niveau de propriété se trouvant à un intervalle de confiance approprié.

7. Procédé selon l'une quelconque des revendications précédentes, où le traitement est commandé dans un système de commande en boucle fermée afin de commander l'équipement de traitement en liaison avec un traitement pour lequel le matériau X est un produit.

8. Procédé selon l'une quelconque des revendications précédentes, où ledit traitement est un traitement de séparation ou de conversion d'hydrocarbures, de préférence un reformage ou un craquage catalytique ou encore un hydrotraitement, une distillation ou un mélange.

9. Procédé selon l'une quelconque des revendications 1 à 7, où ledit traitement est au moins un traitement parmi les suivants, à savoir polymérisation, oligomérisation, ou réaction organique dans laquelle au moins l'un des éléments que constituent le réactif et un produit est un composé fonctionnalisé.

10. Procédé selon l'une quelconque des revendications 1 à 7, où ledit matériau X est une composition comprenant en partie une fraction d'huile de lubrification pouvant être obtenue à partir d'une distillation d'huile sous vide.

# FIG.1

# FIG.2

| MEASURE ABSORPTION | COMPARE ABSORPTION TO STANDARDS | CHOOSE STANDARD(S) | COMPARE STANDARD TO SPEC | ADJUST PROCESS |
|---|---|---|---|---|
| 11 | 12 | 13 | 14 | 15 |